Europäisches Patentamt

European Patent Office

Office européen des brevets

(11) Veröffentlichungsnummer : **0 154 929**
B1

(12) **EUROPÄISCHE PATENTSCHRIFT**

(45) Veröffentlichungstag der Patentschrift :
15.06.88

(21) Anmeldenummer : 85102496.8

(22) Anmeldetag : 06.03.85

(51) Int. Cl.⁴ : **B 65 G 21/02, B 65 G 21/06**

(54) **Rahmen für Bandfördervorrichtungen.**

(30) Priorität : 13.03.84 DE 3409160

(43) Veröffentlichungstag der Anmeldung :
18.09.85 Patentblatt 85/38

(45) Bekanntmachung des Hinweises auf die Patenterteilung : 15.06.88 Patentblatt 88/24

(84) Benannte Vertragsstaaten :
AT BE CH DE FR GB IT LI LU NL SE

(56) Entgegenhaltungen :
DE-A- 2 242 662
DE-A- 3 141 510
GB-A- 891 411
US-A- 3 120 303
US-A- 4 172 677
US-A- 4 232 774

(73) Patentinhaber : Geppert, Helmut
Niederfeld 12
D-5162 Niederzier-Krauthausen (DE)

(72) Erfinder : Geppert, Helmut
Niederfeld 12
D-5162 Niederzier-Krauthausen (DE)

(74) Vertreter : Liermann, Manfred
Josef-Schregel-Strasse 19
D-5160 Düren (DE)

## Beschreibung

Die Erfindung bezieht sich auf Rahmen für Bandfördervorrichtungen und betrifft insbesondere einen aus durch mit ihnen verschraubte Quertraversen zusammengehaltenenen Längsholmen gebildeten Rahmen für Bandfördervorrichtungen, dessen Längsholme jeweils als in Richtung des Fördermittels offene Profile mit einem Außensteg und sich von dessen oberem Ende wegerstreckendem Decksteg ausgebildet sind.

Derartige bekannte Rahmenkonstruktionen weisen als Längsholmprofile U- oder C-Profile auf, die so angeordnet sind, daß ihre zwischen zwei Seitenstegen liegenden Bodenstege die Außenstege des Rahmens bilden und jeweils ein Seitensteg dieser Profile als Decksteg die Anschlußverbindungen der die Längsholmprofile auf Abstand haltenden Quertraversen überdeckt, so daß zwischen beiden Längsholmprofilen ein Abstand gebildet ist. Wenn es sich hierbei um Rahmen für Platten- oder Scharnierbänder handelt, wird meist auf die Deckstege eine Gleitleiste aufgeschraubt, um die Seitenbereiche des Platten- oder Scharnierbandes gleitend abzustützen. Auch Z-förmige Gleitleisten aus Kunststoffmaterial sind bekannt, die mit einem ihrer Außenschenkel jeweils auf einem Decksteg des zugeordneten Längsholmprofils aufliegen und im Bereich ihrer ihre Länge begrenzenden Stirnenden mit diesem verschraubt sind. Weiterhin ist es auch bekannt, bei Platten- bzw. Scharnierbändern eine Gleitwanne in den Zwischenraum zwischen beiden Längsholmprofilen lose eingelegt dadurch zu halten, daß diese als U-Profil mit nach außen abgekröpften Seitenstegen ausgebildet ist und mit ihren seitlichen Abkröpfungsbereichen jeweils auf einem zugeordneten Decksteg des benachbarten Längsholmprofils aufliegt.

Ersichtlich muß bei solchen Ausführungen die Rahmenkonstruktion allein durch Dimensionierung der Längsholmprofile und der Quertraversen so ausgebildet sein, daß sie nicht nur das Gewicht des Fördermittels der Bandfördervorrichtung, welches im Falle einer Platten- oder Scharnierbandkette nicht unbeträchtlich sein kann, sondern auch das Gewicht der beiden Umlenkstationen für das Fördermittel und gegebenenfalls einer zusätzlichen separaten Antriebsstation und insbesondere auch das des Fördergutes verformungsfrei zu tragen vermag. Speziell aus dem Gesichtspunkt ausreichenden Widerstandsmomentes gegen Durchbiegung und Torsion der Rahmenkonstruktion unter Belastung sind dabei Profilquerschnitte zu wählen, die der gesamten Rahmenkonstruktion eine ausreichende Tragfähigkeit und Biege- und Verwindungssteifigkeit vermitteln. Hierdurch aber wird ein nicht unbeträchtliches Gewicht der Rahmenkonstruktion bedingt, das wesentlich den Gestehungspreis der gesamten Bandfördervorrichtung mitbestimmt.

Bei Bandförderern mit elastisch biegsamen Fördermittel hat man zwischen den sich gegenüberliegenden Längsholmprofilen des Rahmens eine Vielzahl von auf gegenüber diesen lose gehaltenen Achsen angeordneten Stützwalzen oder -rollen angeordnet, auf denen das Obertrum von ihnen abgestützt läuft. Kommt es darauf an, daß ein solches biegsames Fördermittel über seiner gesamten Fläche abzustützen ist, so hat man die gesamte Rahmenkonstruktion beschriebener Art mit einem die Deckstege beider einander gegenüberliegenden Längsholmprofile überdeckend auf diesen aufliegenden Gleitblech abgedeckt, das längs seiner den Längsholmprofilen zugeordneten Außenränder mit diesen verschraubt ist, um gegenüber Relativverschiebungen zu den Längsholmprofilen gesichert zu sein.

Ersichtlich herrschen auch bei diesen bei Bandfördervorrichtungen mit elastisch biegsamen Fördermittel verwendeten Ausführungen die gleichen ungünstigen Verhältnisse bezüglich der Erbringung der benötigten Tragfähigkeit bei gleichzeitig ausreichender Biege- und Torsionssteifigkeit, wie vorher für Ausführungen mit Platten- oder Scharnierband als Fördermittel beschrieben. Nicht einmal bei der letztbeschriebenen Ausführung vermag nämlich das als Schlürblech dienende Abdeckblech zur Steifigkeit der Rahmenkonstruktion beizutragen, da seine Befestigungsschrauben lediglich dazu dienen, es gegen Verschiebung gegenüber den Rahmenlängsholmen zu sichern, hingegen weder eine Verbundwirkung zwischen Abdeckblech und Längsholmprofilen haben noch haben können, zumal das Abdeckblech durchaus noch den Freiheitsgrad besitzt, sich unter ungünstigen Belastungsbedingungen oder bei nicht sorgfältiger Anpassung seiner Verschraubungslöcher an die der Längsholmprofile in Richtung normal zu deren Deckstegen aufzuwölben bzw. zu verwerfen.

Da es bei diesen bekannten Ausführungen als nachteilig empfunden wurde, daß bei einsatzbedingten Notwendigkeiten der Änderung der Förderbreite diese Ausführungen mit Quertraversen von einer kleineren auf eine größere Gurtbreite nicht erweitert werden konnten, hat man versucht, eine Tragrahmenkonstruktion für Bandfördervorrichtungen zu schaffen, welche keine Quertraversen aufweist, dafür aber ein auswechselbares zwischen zwei Schalen-Längsträgern C-förmigen Querschnittes angeordnetes Zwischenteil U-förmigen Querschnittes, so daß sich eine tunnelartige, bei Austausch des Zwischenteils gegen ein solches anderer Breite im Querschnitt verstellbare Schalenkonstruktion ergibt (DE-A-2 242 662). Diese bekannte Ausführung hat sich praktisch nicht bewährt, da sie mit einigen gravierenden Unzulänglichkeiten behaftet ist. Für eine vorgegebene Belastung durch das Fördergut ist bei dieser bekannten Ausführung die nutzbare Förderbreite derselben vergleichsweise stark begrenzt, da die seitlichen Schalen-Längsträger-Formlinge zufolge ihrer formmäßigen Ausbildung und Dimensionierung eine nicht ausreichende Eigensteifigkeit aufweisen, so daß die gesamte Tragrahmenkonstruktion dieser Art auch im zusammengebauten Zustand an einer gewissen Labilität leidet, will man nicht den Weg verhältnismäßig großer Wandstärke der Schalen-Längsträger-Formlinge gehen, der wiederum in ungünstiger Weise ein übergroßes Metergewicht der Tragrahmenkonstruktion mit entsprechender gravierend ins Gewicht fallender Verteuerung des Gestehungspreises bedingt und gleichzeitig auch die Vorfertigung der Schalen-Längsträger-Formlinge und deren Handhabung bei Montage und Demontage nicht unwesentlich erschwert.

Angesichts dieser Umstände wurde diese bekannte Konstruktion auch lediglich für einen rollengestützten Muldenbandförderer, nicht jedoch für jede beliebige Bandförderer-Bauart einschließlich von Flachbandförderern vorgeschlagen, wobei zur Erzielung eines gewissen Mindestmaßes an Eigensteifigkeit der Schalen-Längsträger-Formlinge die Tragkonstruktion für die seitlichen Führungsrollen des Muldenbandes zumindest eine der Knickstellen des Schalen-Profils übergreifend und im Sinne eines Knotenbleches aussteifend fest mit dem Schalen-Längsträger-Formling verbunden ist. Hierdurch allerdings wird die räumliche Ausladung der Schalen-Längsträger-Bauteile beträchtlich erhöht und dadurch deren Lagerung und Handhabung erschwert, ohne daß eine wirksame Verbesserung des Widerstandsmomentes der gesamten Tragrahmenkonstruktion in deren Zusammenbauzustand gegenüber Durchbiegung und/oder Torsion brauchbar erbracht würde. Dies liegt nicht zuletzt auch an der bei dieser bekannten Ausführung konzeptionsbedingten Verteilung des Eigengewichtes der Schalen-Längsträger-Formlinge, die erfahrungsgemäß dazu führt, daß beim Transport derselben vom Herstellerwerk zum Einsatzort gewisse Wippbewegungen praktisch nicht auszuschließen sind, welche zwecks Vermeidung von Zerstörungen der Lackschicht dieser Teile mit den bekannten Korrosionsgefahren für diese geeignete Vorkehrungen in Form nicht zuletzt auch von schützenden Zwischenlagen erfordern, welche den gesamten Transport nicht unwesentlich komplizieren.

Hinzu kommt ferner, daß die unmittelbare Aufstellung einer solchen bekannten Tragrahmenkonstruktion auf dem Untergrund praktisch nicht möglich ist, da diese stets eine ebene Aufstandsfläche erfordert, so daß in jedem Falle ein zusätzlicher Grundrahmen erforderlich ist, mit dem diese ebene Aufstandsfläche geschaffen wird. Dieser Grundrahmen wiederum erfordert erfahrungsgemäß zeit- und lohnkostenintensive Anpassungsarbeiten an den normalerweise keineswegs ebenen, meist gewachsenen Untergrund des Aufstellungsortes.

Aus allen diesen Gründen ist diese bekannte Tragrahmen-Ausführung lediglich als Gurt-Unterbau für einen Muldenband-Förderer vorgeschlagen worden, dessen gesamte Tragrahmenausführung zusätzlich noch einen Grundrahmen und die Tragrollenkonstruktion aufweist, die dann ihrerseits zweckmäßig so ausgeführt wird, daß sie den seitlichen Schalen-Längsträger-Formlingen jedenfalls im Verein mit deren Aufspannung auf dem Grundrahmen wenigstens ein Mindestmaß an Eigensteifigkeit vermittelt.

Schließlich ist auch noch eine Tragrahmenkonstruktion für Bandfördervorrichtungen bekanntgeworden, bei welcher die Längsholme nicht durch Quertraversen, sondern vielmehr durch Zuganker mit Abstandshülsen auf Abstand zueinander gehalten werden, wobei die Abstandshülsen gegenüber dem Zuganker mittels eines eigens hierfür vorgesehenen Positionierstückes mit Auflagenase positioniert werden (US-A-4 232 774). Abgesehen davon, daß eine solche Ausführung besonders einzelteilaufwendig und damit aus allen wirtschaftlichen Gesichtspunkten kostenintensiv ist (Herstellung der Einzelteile ebenso wie Montage derselben zum Rahmenverband), vermag ein solcher Zuganker mit Abstandshülse erfahrungsgemäß aus prinzipiellen Gründen der Führung des Kraftflusses nicht die gleiche Festigkeit und Steifigkeit gegenüber auf Verformung wirkenden Belastungen zu erbringen wie eine Quertraverse, die in der Lage ist, über das gleiche Bauteil, nämlich ihren Quersteg, sei dieser nun als Vollstab- oder Rohrabschnitt ausgebildet, sowohl Zugkräfte als auch Druckkräfte zu übertragen. Nicht nur hierdurch wird bei dieser bekannten Ausführung die erwünschte Steigerung der Möglichkeiten für Leichtbauweise beeinträchtigt, sondern auch dadurch, daß zur Bildung einer geeigneten Gleitbahn für das Obertrum des Fördermittels mittels Anschlußwinkeln quer zu den beiden seitlichen Rahmenlängsholmen verlaufende Tragbrücken vorgesehen sein müssen, gegenüber denen von oben her ein parallel zu einem der Rahmenlängsholme verlaufendes Seitenprofil und ein den Zwischenraum zum anderen Rahmenlängsholm abdeckendes Deckprofil verschraubt sind. Der Anschlußaufwand in Form nicht nur einer Vielzahl von Einzelteilen, wie Anschlußwinkeln, Stützflächen und dgl., sondern auch an Werkzeugvorhaltung und Montagezeit ist bei dieser bekannten Ausführung einer Tragrahmenkonstruktion für Bandfördervorrichtungen erheblich, und es wird auch von seiten des Montagepersonals beträchtliche Erfahrung und trotz dieser große Aufmerksamkeit erfordert. Ersichtlich ist bei dieser bekannten Konstruktion der erwünschten Leichtbauweise abgesehen von dem nicht zu unterschreitenden Gewicht der Vielzahl von zudem auch noch höchst unterschiedlichen Einzelteilen auch durch die Tragrahmenbauweise selbst sowie durch die Vielzahl der für diese erforderlichen Profilteile, die schon aus fertigungstechnischen Gründen eine Mindestwandstärke aufweisen müssen, eine Grenze gesetzt, indem hierdurch ein gewisses Mindestmetergewicht erzwungen wird, obgleich es für eine bestimmte vorgegebene Belastung jedenfalls aus Tragfähigkeits- bzw. Festigkeitsgründen überhaupt nicht erforderlich wäre.

Der Erfindung liegt somit die Aufgabe zugrunde, mit einfachen und kostengünstigen Mitteln unter Vermeidung der Nachteile bekannter Rahmenkonstruktionen eine Möglichkeit zu schaffen, einen Rahmen gattungsgemäßer Art aus möglichst wenig Einzelteilen und insbesondere unter Verzicht auf erfahrungsgemäß stets kostenintensive Verbindungselemente, wie beispielsweise Anschlußbrücken oder Verbindungswinkel, einfach, schnell und bequem entweder im Herstellerwerk für fertigmontierte Lieferung oder aber am Einsatzort besonders rationell erstellen zu können und hierfür die benötigten Einzelteile ohne besondere Vorkehrungen leicht und bequem und ohne Gefahren für Lackierungen und daraus resultierende Korrosionsschäden transportieren und handhaben zu können, und zwar dies zudem auch noch aus Profilteilen möglichst einfacher und entsprechend kostengünstiger Querschnittskonturierung, wobei ferner im Interesse einer Verbesserung der Lagerhaltung und des Transportes dieser Einzelteile sowie einer Erleichterung der Handhabung derselben bei Erstellung und/oder Montage trotz ausreichender Tragfähigkeit und Biege- und Verwindungssteifigkeit eine wesentliche Gewichtsverringerung möglich und eine bisher nicht für erreichbar gehaltene Universalität bezüglich der Erstellung unterschiedlichster Bandfördervorrichtungen mit verschiedenster Förderbreite und -länge und entsprechend auch unterschiedlicher Tragfähigkeitseigenschaften durch Verwendung im wesentlichen von standardisierten Einzelteilen mit den entsprechenden Vorteilen hinsichtlich Lagerhaltung der Einzelteile, Montage derselben zur im einzelnen Einsatzfall benötigten Rahmenkonstruktion und gegebenenfalls Demontage bzw. Umrüstung mit den darauf beruhenden erwünschten Folgen für die Senkung des Gestehungspreises gewährleistet sein soll und insgesamt die Möglichkeiten für eine erwünschte Leichtbauweise vorteilhaft gesteigert werden können sollen.

Dies wird durch die Erfindung in überraschend einfacher und wirtschaftlicher Weise dadurch erreicht, daß bei einem aus durch mit ihnen verschraubte Quertraversen zusammengehaltenen Längsholmen gebildeten Rahmen für Bandfördervorrichtungen, dessen Längsholme jeweils als in Richtung des Fördermittels offene Profile mit einem Außensteg und sich von dessen oberem Ende wegerstreckendem Decksteg ausgebildet sind, die Längsholmprofile jeweils am freien Ende ihres Decksteges einen sich von diesem weg nach unten erstreckenden Anschlußflansch aufweisen und beide Längsholmprofile mittels eines als U- oder C-Profil ausgebildeten Zwischenstückes miteinander verbunden sind, dessen beide sich von seinem Mittelsteg etwa komplementär zum Anschlußflansch des benachbarten Längsholmprofils wegerstreckende Seiten- und/oder Randstege jeweils mit diesem verbunden sind.

Es ist ersichtlich, daß durch den erfindungsgemäßen Einsatz eines erfindungsspezifisch ausgebildeten Zwischenstückes im Verein mit der durch die Erfindung vorgesehenen Art der Verbindung desselben mit den Rahmenlängsholmprofilen sich ein durch die Quertraversen ausgesteiftes Verbundbauteil ergibt, das bei vergleichsweiser gleicher Querschnittsausbildung hinsichtlich Querschnittskonturierung und/oder -fläche eine gegenüber bekannten Rahmenkonstruktionen auf ein Vielfaches erhöhte Tragfähigkeit und Biege- und Verwindungssteifigkeit besitzt und bei Auslegung für gleiche Widerstandsfähigkeit gegenüber den auftretenden Belastungen im Vergleich zu solchen herkömmlichen Rahmenausführungen einen erheblich geringeren Materialquerschnitt der Längsholmprofile aufweisen kann, der bekanntlich wesentlich das Gewicht der Rahmenkonstruktion und damit auch die Gestehungskosten der gesamten Bandfördervorrichtung mitbestimmt. Dabei läßt sich im Rahmen der Erfindung die gesamte Rahmenausführung entweder als offene, auch als Halbkastenprofil bezeichnete oder aber als geschlossene, auch als Vollkastenprofil bezeichnete Konstruktion ausführen. Dabei hat im übrigen Erfahrung gezeigt, daß für die meisten Bedarfsfälle die erfindungsgemäße Maßnahme, zusätzlich zu dem aus Längsholmprofilen und diese miteinander verbindenden Quertraversen gebildeten Rahmen herkömmlicher Ausführungsart auch noch ein mit beiden Längsholmprofilen verbundenes Zwischenstück zu verwenden, keineswegs ein gegenüber dem Gesamtgewicht herkömmlicher Rahmenausführungen größeres Gesamtgewicht zu bedingen braucht, vielmehr häufig sich bei gleichen Widerstandsfähigkeitseigenschaften gegenüber im Vergleich zu herkömmlichen Rahmenausführungen gleichen Widerstandsfähigkeitseigenschaften gegenüber auftretenden Belastungen sogar Einsparungen des Gesamtgewichtes der Rahmenkonstruktion nach der Erfindung erzielen lassen. Ein solcher Rahmen kann nach der Erfindung mit Ausnahme des Zwischenstückes und etwa benötigter Schraubelemente für dessen Verbindung mit den benachbarten Längsholmprofilen, welche als marktübliche Normteile preisgünstig überall zur Verfügung stehen, ohne sonstige Hilfsmittel oder Zusatzteile, wie etwa Stützbrücken oder Verbindungswinkel od. dgl., einfach, schnell und bequem montiert und im Bedarfsfall, beispielsweise zwecks Umrüstung auf einen anderen Einsatzfall, wie etwa Einfügung in eine Förderstraße größerer Förderbreite, demontiert und nach Austausch einiger funktionstüchtiger Einzelteile der Bandfördervorrichtung, wie beispielsweise des Fördermittels und der Umlenkwalzen für dieses und gegebenenfalls auch einer zusätzlichen Antriebswalze, wieder montiert werden.

Ferner hat sich überraschend gezeigt, daß bei Rahmenkonstruktionen nach der Erfindung sich im Vergleich zu der bekannten Ausführung mit Schalen-Längsträger-Formlingen mit zwischen diesen angeordneter U-förmiger Zwischenbrücke die Wandstärke sämtlicher rahmenbildender Bauteile einschließlich der Längsholmprofile für eine vorgegebene Belastung verringern und dadurch das Metergewicht des Tragrahmens der Bandfördervorrichtung und damit einhergehend der Gestehungspreis derselben wesentlich senken läßt. Während nämlich die Einfügung des Zwischenstückes bei dieser bekannten Bauweise bei unverändert beibehaltenem Querschnitt der C-förmigen Schalenprofile der Längsholme derselben bei vorgegebener Fördergutbelastung zu überproportional zunehmenden Vergrößerungen der spannungsmäßigen Belastung in den Rahmenbauteilen und insbesondere den Längsholmprofilen führt und daher zu einer Verstärkung der Querschnitte derselben bei gleichbleibender Fördergutbelastung zwingt, oder umgekehrt für gleichbleibende Längsholmprofile (entsprechend gleichbleibender Wandstärke derselben) mit zunehmender Förderbreite, wie diese sich beispielsweise durch Anpassung an größere Brecherausführungen als notwendig erweisen kann, eine Verringerung der höchstzulässigen spezifischen Breitenbelastung des Förderers mit Fördergut erforderlich macht, liegen die Verhältnisse bei der Konstruktion nach der Erfindung gerade umgekehrt. Hier hat sich überraschend herausgestellt, daß für gleiche spezifische Breitenbelastung des Fördermittels mit Fördergut und dementsprechend auch des Rahmengestells die Wandstärken aller rahmenbildenden Bauteile und insbesondere der Längsholmprofile vergleichsweise mit dünnerer Wandstärke ausgeführt werden können oder daß nicht nur gleiche, sondern sogar erheblich größere spezifische Breitenbelastungen bei unveränderter Ausführung der rahmenbildenden Bauteile abgestützt werden können, was in beiden Fällen zu einer wesentlichen Reduzierung des Metergewichtes des Rahmengestells und damit auch des Gestehungspreises desselben führt.

Zusätzlich zur Ermöglichung einfacher und schneller Änderungen der Förderbreite unter Beibehaltung wesentlicher Bauteile des Förderers ermöglicht die Erfindung es ferner auch noch, den Rahmen der Bandfördervorrichtung im Herstellerwerk vorzufertigen und als Ganzes oder in größeren bzw. längeren Teilstücken ohne besondere Vorkehrungen bequem und gefahrlos zum Einsatzort zu transportieren und ferner auch noch für eine vorgegebene spezifische Belastung pro Meter Förderlänge vergleichsweise erheblich leichter ausführen zu können, als bei herkömmlichen Rahmenausführungen möglich. Die Schwierigkeiten, die sich bei der bekannten Ausführung mit C-förmigen Schalen-Längsträger-Formlingen durch die Notwendigkeit genauester Ausrichtung der Festlegung des Rahmens gegenüber dem Untergrund ergeben und erfahrungsgemäß geschultes, erfahrenes und mit Sorgfalt arbeitendes Fachpersonal erfordern, fallen bei der erfindungsgemäßen Rahmenausführung weg. Bei dieser kommt es hierauf überhaupt nicht an, da diese aufgrund ihrer Konzeption eine momentenmäßige Festspannung am Untergrund grundsätzlich nicht benötigt, sondern vielmehr auf diesen ganz einfach aufgestellt werden kann, und zwar dies in vielen Fällen sogar ohne Festlegung gegenüber Lateralverschiebungen.

Ferner bietet die Erfindung ersichtlich die erwünschte Möglichkeit, die Gestehungskosten von Bandfördervorrichtungen insbesondere hinsichtlich ihrer Förderbreite und/oder -länge unterschiedlicher Ausführung auch dadurch günstig beeinflussen zu können, daß für sämtliche Ausführungen gleichartige Rahmenlängsholmprofile erstellt und auf Lager gehalten werden können und lediglich auf die jeweilige Förderer-Ausführung abgestimmte Zwischenstücke bereitgestellt zu werden brauchen, wobei natürlich in der gleichen Weise, wie bisher üblich, für unterschiedliche Förderbreiten auch unterschiedliche Quertraversen vorgesehen sein müssen.

In weiterer zweckmäßiger Fortbildung können die Seitenstege des Zwischenstückes und der zugeordnete Anschlußflansch des benachbarten Längsholmprofils jeweils kraftschlüssig und/oder formschlüssig miteinander verbunden sein. Dabei wird sich kraftschlüssige oder kraftschlüssige und gleichzeitig formschlüssige Verbindung dieser Bauteile immer dann empfehlen, wenn die Rahmenkonstruktion im Herstellerwerk für fertige Lieferung zum Aufstellungs- bzw. Einsatzort erstellt wird, während reine formschlüssige Verbindung dieser Bauteile universell die Möglichkeit solcher Erstellung der Rahmenkonstruktion oder aber der Montage derselben erst am Einsatzort eröffnet.

Im Falle reiner kraftschlüssiger Verbindung des Zwischenstückes mit seinen beiden benachbarten Längsholmprofilen kann es vorteilhaft sein, wenn die Seitenstege des Zwischenstückes und der zugeordnete Anschlußflansch des benachbarten Längsholmprofils jeweils miteinander verklebt sind. Für Einsatzfälle, in denen neben kraftschlüssiger Verbindung etwa aus Sicherheitsgründen gleichzeitig auch formschlüssige Verbindung erwünscht ist, kann es sich empfehlen, daß die Seitenstege des Zwischenstückes und der zugeordnete Anschlußflansch des benachbarten Längsholmprofils jeweils mindestens eine aus einer vorzugsweise mittelpunkt- oder mittelliniensymmetrischen Vertiefung oder Ausnehmung im einen Bauteil und einer hierzu komplementären Ausbauchung im anderen Bauteil bestehende Verrastung beider Bauteile aufweisen und beide Bauteile miteinander verklebt sind, wobei je nach konstruktiver Zweckmäßigkeit die Vertiefung oder Ausnehmung im Seitensteg des Zwischenstückes oder im diesem zugeordneten Anschlußflansch des benachbarten Längsholmprofils und die in diese eingreifende Ausbauchung im anderen Bauteil, d. h. dem Anschlußflansch des zugeordneten Längsholmprofils, oder aber umgekehrt im Seitensteg des Zwischenstückes vorgesehen sein kann, wobei dann allerdings die Vertiefung oder Ausnehmung im zugeordneten Anschlußflansch des benachbarten Längsholmprofils angeordnet ist.

Für reine formschlüssige Verbindung von einander gegenüberliegenden Längsholmprofilen und zwischen diesen angeordnetem Zwischenstück hat es sich als besonders empfehlenswert herausgestellt, wenn in dem Anschlußflansch eines jeden Längsholmprofils mindestens eine Reihe von Durchgangs- oder Gewindelöchern in regelmäßigem Abstand zueinander und in jedem Seitensteg des Zwischenstückes mindestens eine Reihe von Durchgangslöchern oder von komplementär zu Durchgangslöchern des zugeordneten Anschlußflansches des benachbarten Längsholmprofils vorgesehenen Gewindelöchern in rastergleicher Anordnung vorgesehen ist und benachbarte Längsholmprofil-Anschlußflansche und Zwischenstück-Seitenstege mittels in komplementäre Durchgangs- bzw. Gewindelöcher in diesen ein- bzw. diese durchgreifender Schraubelemente miteinander verschraubt sind. Diese Ausführung ermöglicht nämlich eine nicht nur extrem kostengünstige, weil praktisch nur marktgängige preisgünstige Normteile verwendende, sondern auch besonders einfach, schnell und bequem an jedem beliebigen Ort montier- und demontierbare Ausführung eines Rahmens für Bandfördervorrichtungen.

Falls es aus Gründen der Erzielung eines geeigneten Widerstandsmomentes der an der Rahmenkonstruktion nach der Erfindung beteiligten Profile zweckmäßig sein sollte, können die Längsholmprofile jeweils am freien Ende ihres Decksteges einen sich mit Neigung zur Ebene des Fördermittels normalen Mittellängsebene der Fördervorrichtung erstreckenden Anschlußflansch aufweisen, wobei dieser sich mit seinem freien Ende zu dieser Mittellängsebene der Bandfördervorrichtung oder aber von dieser weg erstrecken kann. Entsprechend ist dann gemäß der Konzeption der Erfindung das Zwischenstück so ausgebildet, daß seine Seitenstege komplementär zu den Anschlußflanschen der benachbarten Längsholmprofile verlaufen. Für die meisten Einsatzfälle wird es jedoch zu bevorzugen sein, wenn gemäß einer alternativen Fortbildung der Erfindung die Längsholmprofile jeweils am freien Ende ihres Decksteges einen sich etwa parallel zur Ebene des Fördermittels normalen Mittellängsebene der Bandfördervorrichtung erstreckenden Anschlußflansch aufweisen. Überdies bringt dieser untergeordnete Erfindungsgedanke die vorteilhafte Möglichkeit mit sich, die gleichen Längsholmprofile für unterschiedlichste Rahmenausführungen benutzen zu können, was der aufgabengemäß angestrebten Universalität besonders zugute kommt.

Obgleich es nach der Konzeption der Erfindung keineswegs erforderlich ist, daß zwecks Erzielung einer besonders widerstandsfähigen Rahmenkonstruktion das Mittelstück eine höhenmäßig spezifische Lage einnehmen muß, hat es sich als für die überwiegende Zahl von Einsatzfällen zu bevorzugen erwiesen, wenn gemäß einem weiteren untergeordneten Erfindungsgedanken das Zwischenstück mit den Deckstegen der beiden Längsholmprofile fluchtendem Mittelsteg und sich von diesem nach unten wegerstreckenden Seitenstegen angeordnet ist. Es hat sich nämlich gezeigt, daß bei einer solchen Ausführung einerseits sich ein für die Widerstandsfähigkeit der gesamten Rahmenkonstruktion besonders günstiger Kraftfluß in deren einzelnen Profilbereichen einstellt und andererseits sich gleichzeitig auch noch die vorteilhafte Möglichkeit der unmittelbaren Unter- bzw. Abstützung des Fördermittels über einem besonders großen Bereich seiner Breite, und zwar meist sogar dessen gesamter Breite ergibt, was wiederum Möglichkeiten für verhältnismäßig leichte, weil nicht auf Durchbiegung, sondern praktisch lediglich auf Zug dimensionierte Ausführung des Fördermittels, beispielsweise eines elastisch verformbaren Förderbandes, eröffnet. Dabei ist es mit Ausnahme etwaiger Verbesserung des Widerstandsmomentes der Gesamtrahmenkonstruktion gegenüber Verformungsbelastungen unerheblich, ob bei einer solchen Ausführung das Mittelstück .als U- oder aber als C-Profil ausgeführt ist.

Für Bandfördervorrichtungen mit Fördermittel in Form eines Platten- oder Scharnierbandes hat sich eine alternative Ausführung besonders bewährt, bei der das Zwischenstück als U-Profil ausgebildet und mit gegenüber den Deckstegen der beiden Längsholmprofile tiefer liegendem Mittelsteg und sich von diesem nach oben wegerstreckenden Seitenstegen angeordnet ist. Dies nämlich eröffnet trotz Beibehaltung der durch die Erfindung erreichten Vorteile gerade für Platten- oder Scharnierbandförderer den erforderlichen Laufraum für die Anlenkungen bzw. Scharniere der Platten oder Tragstücke eines solchen Förderers zwischen den beiden Längsholmprofilen, wobei zudem auch noch dieser Laufraum durch die spezifische Ausgestaltung des Zwischenstückes gegen Zugriff von außen her geschützt ist und gleichzeitig eine Förderrinne für während des Fördervorganges etwa auftretende Bruchteile des Fördergutes, wie beispielsweise Scherben od. dgl. oder aber sonstige Verunreinigungen, bildet, die durch die nunmehr als Förderglieder eines Kratzförderers wirkenden Anlenkungen bzw. Scharniere in Förderrichtung ausgetragen und als Abfall beseitigt werden können.

In weiterer zweckmäßiger Ausgestaltung dieses untergeordneten Erfindungsgedankens kann ferner das Zwischenstück am freien Ende eines jeden seiner Seitenstege einen sich parallel zum Decksteg des benachbarten Längsholmprofils erstreckenden Tragflansch aufweisen, wobei dieser ferner eine mehr als die Hälfte der Breite des zugeordneten Decksteges des benachbarten Längsholmprofils überdeckende Breite besitzen kann. Auf diese Weise wird nämlich mit einem einzigen Profil, nämlich allein dem Zwischenstückprofil, nicht nur die Führungswanne für die Anlenkungen bzw. Scharniere des Platten- bzw. Scharnierbandes erbracht, sondern gleichzeitig auch eine unterbrechungsfreie Führung der Seitenkantenbereiche desselben auf einer nicht nur relativ großen Fläche, sondern, wenn die Breite der Tragflansche des Zwischenstückes der Breite der Deckflansche der Längsholmprofile entspricht, sogar über maximale Breite, die sogar der maximalen Breite des Rahmens der Bandfördervorrichtung entsprechen und im Extremfall sogar darüber hinausgehen kann, falls dies einmal erforderlich sein sollte.

In weiterer zweckmäßiger Fortbildung der Erfindung können gemäß einem untergeordneten Erfindungsgedanken die Längsholmprofile jeweils als U-Profile mit unterschiedlich langen Seitenstegen ausgebildet und mit ihrem Mittelsteg den Decksteg und mit ihrem kürzeren Seitensteg den Anschlußflansch bildend angeordnet sein, so daß ihr längerer Seitensteg jeweils den Außensteg bzw. die Seitenwand des Rahmens bildet. Eine solche Ausführung hat den Vorteil, daß trotz ausreichender Verformungssteifigkeit des Rahmens dessen Inneres von der Unterseite her zugänglich ist, während seine Oberseite geschlossen ist und das Rahmeninnere vor Einfall von beispielsweise Abfall, Fördergut, Bruchstücken desselben oder sonstigen Fremdkörpern od. dgl. schützt, ohne daß irgendwelche Einschränkungen hinsichtlich der konstruktiven Ausgestaltung der Rahmenoberseite hinzunehmen wären. Dies hat sich insbesondere bei nicht selten auftretenden Einsatzfällen als besonders vorteilhaft erwiesen, bei denen es gilt, an der Bandfördervorrichtung einfach und rasch Zusatzaggregate, die während des Förderbetriebes benötigt werde, wie beispielsweise Metallsuchgeräte od. dgl., am Rahmen in Arbeitsstellung leicht demontierbar festzulegen.

Andererseits kann es insbesondere aus Gründen der Erzielung ausreichender Verformungssteifigkeit des Rahmens bei weiterhin verringerter Profilwandstärke zweckmäßig sein, wenn in weiterer Fortbildung dieses untergeordneten Erfindungsgedankens die Längsholmprofile jeweils am freien Ende ihres längeren Seitensteges einen sich von diesem weg in Richtung der zur Ebene des Fördermittels normalen Mittellängsebene der Bandfördervorrichtung erstreckenden Randflansch aufweisen. Dieser erbringt ersichtlich eine Vergrößerung des Widerstandsmomentes der Längsholmprofilquerschnitte und damit eine Verbesserung der Verformungssteifigkeit mit der Möglichkeit entsprechender Gewichtseinsparung durch Querschnittsverringerung über der gesamten Profilfläche. Dabei kann der Randflansch eine den Zwischenraum zwischen Innenseite des ihn tragenden Außensteges des Längsholmprofils und dem benachbarten Ende einer Stützrolle oder Stützwalze, sollte die Fördervorrichtung mit einer Reihe derselben ausgerüstet sein, oder einer Stütztraverse für das Untertrum des Fördermittels übergreifende oder eine im Vergleich zu diesem Zwischenraum geringere Breite aufweisen. Im ersteren Fall kann der Randflansch als Sicherungselement gegenüber unbefugtem Zugriff zu im Rahmeninneren angeordneten bewegten Teilen herangezogen werden und dadurch entsprechende andere kosten- und montageaufwendige Maßnahmen erübrigen, und im letzteren Fall kann bei ausreichender Verformungssteifigkeit ein den meisten Bedarfsfällen genügender Sicherungseffekt erreicht werden, da erfahrungsgemäß bei den meisten Bandfördervorrichtungs-Ausführungen es ausreichend ist, wenn die außenstegnahen Rahmenlängsholmbereiche des Rahmeninnenraums gegen unbefugten Zugriff gesichert sind.

Zur weiteren Verbesserung der Widerstandsfähigkeit des Rahmens nach der Erfindung gegenüber Verformungen mit der Möglichkeit entsprechender Querschnitts- und Gewichtsverringerung der Längsholmprofile können gemäß weiterer erfinderischer Fortbildung die Längsholmprofile jeweils am freien Ende ihres Randflansches einen sich in Richtung auf den Decksteg zu erstreckenden Versteifungsflansch aufweisen. Dieser kann sich mit Neigung gegenüber der zur Ebene des Fördermittels normalen Mittellängsebene der Bandfördervorrichtung und dabei mit nach oben bezüglich dieser Mittellängsebene divergierender oder konvergierender Neigung erstrecken, wobei der Neigungswinkel zweckmäßig bis etwa 30° gegenüber dieser Mittellängsebene betragen kann, während andererseits der Versteifungsflansch sich auch etwa parallel zu dieser Mittellängsebene der Bandfördervorrichtung erstrecken kann. Diese Fortbildung der Erfindung ermöglicht es, mit Vorteil für die Erstellung von Rahmenkonstruktionen herkömmlicher Ausführung vorhandene Längsholmprofile auch für die Erstellung von Rahmenausführungen nach der Erfindung verwenden zu können und dafür lediglich eine jeweils entsprechend angepaßte Mittelstückausführung bereitstellen zu müssen. Hierbei ist wiederum von besonderem Vorteil, daß für eine vorgegebene bzw. gewünschte Tragfähigkeit der Rahmenkonstruktion vorhandenes Profilmaterial für die Längsholmprofile Verwendung finden kann, das bei Nutzung für die Erstellung herkömmlicher Rahmenkonstruktionen für Tragfähigkeiten bzw. Verformungssteifigkeiten vergleichbarer Größe völlig ungeeignet wäre.

In weiterer zweckmäßiger Fortbildung können die Versteifungsflansche beider Längsholmprofile gleichzeitig auch noch einer anderen Aufgabe nutzbar gemacht werden, indem sie in zueinander fluchtender Anordnung mindestens eine Reihe von in regelmäßigem Abstand zueinander angeordneten Durchgangslöchern und/oder eine Reihe zum freien Rand des jeweiligen Versteifungsflansches hin offener Aufnahmeschlitze für Achsen von Andrück- oder Führungswalzen oder -rollen, Wellen von Zusatzaggregaten, Verbindungselemente zu Anschlußbauteilen od. dgl. aufweisen. Es wird also hier zusätzlich zu der erwünschten Aussteifungsfunktion des jeweilige Längsholmprofil auch noch dazu herangezogen, andere aufwendige Anschluß- bzw. Lagerungskonstruktionen für die benötigten weiteren Bauteile des Bandfördervorrichtung oder Zusatzaggregate derselben dadurch zu erübrigen, daß es selbst diese Funktionen mitübernimmt.

Während bisher Rahmenausführungen nach der Erfindung mit grundsätzlich von ihrer Unterseite her offenem Rahmeninnerem ins Auge gefaßt sind, auch wenn die Randflansche der Längsholmprofile eine solche Breite aufweisen sollten, daß die gesamte Rahmenbreite durch die beiden sich auf einander zu erstreckenden Randflansche der beiden einander gegenüberliegenden Längsholmprofile übergriffen wird, kann die Konzeption der Erfindung für manche Einsatzfälle zweckmäßig noch insoweit weitergetrieben werden, als gemäß einem anderem untergeordneten Erfindungsgedanken mit den Versteifungsflanschen der Längsholmprofile jeweils ein Seitensteg eines als U- oder C-Profil ausgebildeten Bodenteils kraft- und/oder formschlüssig verbunden ist. Dabei können in weiterer zweckmäßiger Fortbildung die Seitenstege des Bodenteils und der zugeordnete Versteifungsflansch des benachbarten Längsholmprofils jeweils mindestens eine aus einer vorzugsweise mittelpunkt- oder mittelliniensymmetrischen Vertiefung oder Ausnehmung im einen Bauteil und einer hierzu komplementären Ausbauchung im anderen Bauteil bestehende Verrastung beider Bauteile aufweisen. Da es in den meisten Einsatzfällen erwünscht sein wird, daß das Rahmeninnere für die Vornahme von Montage- oder Justierarbeiten insbesondere an den beweglichen Teilen der Bandfördervorrichtung von unten her zugänglich ist, hat es sich als besonders zu bevorzugen erwiesen, wenn gemäß einer Alternative in dem Versteifungsflansch eines jeden Längsholmprofils mindestens eine Reihe von Durchgangs- oder Gewindelöchern in regelmäßigem Abstand zueinander und in jedem Seitensteg des Bodenteils mindestens eine Reihe von Durchgangslöchern oder von komplementär zu Durchgangslöchern des zugeordneten Versteifungsflansches des benachbarten Längsholmprofils vorgesehenen Gewindelöchern in rastergleicher Anordnung vorgesehen ist und benachbarte Längsholmprofil-Versteifungsflansche und Bodenteil-Seitenstege mittels in komplementäre Durchgangs- bzw. Gewindelöcher in diesen ein- bzw. diese durchgreifender Schraubelemente miteinander verschraubt sind.

Eine besonders zweckmäßige Ausgestaltung dieses untergeordneten Erfindungsgedankens ergibt sich bei als U-Profil ausgebildetem Bodenteil dadurch, daß dieses mit seinem Mittelsteg auf den freien Randkanten der Versteifungsflansche der beiden Längsholmprofile aufliegend und mit seinen Seitenstegen diese hintergreifend angeordnet ist. Hierdurch nämlich läßt sich ohne besondere zusätzliche Maßnahmen die Festlegungsverbindung von Bodenteil und benachbarten Längsholmprofilen dadurch verbessern, daß diese ungeachtet dessen, ob sie als kraftschlüssige oder aber als formschlüssige Verbindung ausgeführt ist, auf Druck und nicht auf Zug belastet wirken kann. Freilich ist im Rahmen der Erfindung auch die Möglichkeit geboten, das Bodenteil mit seinen beiden Seitenstegen zwischen den Außenseiten der Versteifungsflansche der beiden Längsholmprofile liegend anzuordnen, wobei dann allerdings die Festlegungsverbindung, beispielsweise die für diese verwandten Schraubelemente, auf Zug beansprucht werden und daher normalerweise größer zu dimensionieren sind als dies für Druck- bzw. Stauchungsbelastung erforderlich wäre. Diese letztbeschriebene Ausführung bringt jedoch häufig den Vorteil schnellerer und einfacherer Zugänglichkeit des Rahmeninneren im Bedarfsfall mit sich, da nach Lösen der Festlegungsverbindung bei dieser Ausführung das Bodenteil ganz einfach nach unten herausfällt.

Eine unerwartete Steigerung der Tragfähigkeit und Widerstandsfähigkeit des Rahmens nach der Erfindung gegenüber sowohl Biege- als auch Verwindungsbelastungen hat sich sowohl bei Ausführungen mit als auch solchen ohne Bodenteil ergeben, wenn gemäß einem anderen untergeordneten Erfindungsgedanken den Verbindungen zwischen Anschlußflansch eines Längsholmprofils und zugeordnetem Seitensteg des Zwischenstückes und/oder zwischen Versteifungsflansch eines Längsholmprofils und zugeordnetem Seitensteg eines etwa vorgesehenen Bodenteils durch leichtes Divergieren von Anschlußflansch und Mittelstück-Seitensteg bzw. Versteifungsflansch und Bodenteil-Seitensteg in Richtung auf ihre freien Ränder zu eine auf Lösen dieser Verbindungen gerichtete Vorspannung aufgeprägt wird. Bei richtiger Beurteilung dieser Vorspannung und entsprechender Wahl des Maßes des Divergierens jeweils beider miteinander zu verbindenden Bauteile läßt sich auch hierdurch überraschend eine weitere Verringerung der Profilquerschnitts-Abmessungen mit entsprechender in eingangs beschriebener Weise vorteilhafter Gewichtseinsparung erzielen.

Gemäß einem anderen untergeordneten Erfindungsgedanken kann zweckmäßig der Anschlußflansch eines jeden Längsholmprofils einen in Richtung auf die zur Ebene des Fördermittels normale Mittellängsebene der Bandfördervorrichtung zu abgekröpften Anschlagbereich aufweisen, auf dem bei Ausführung des Zwischenstückes als U-Profil der zugeordnete Seitensteg desselben und bei Ausführung des Zwischenstückes als C-Profil der den zugeordneten Seitensteg in Richtung auf diese Mittellängsebene der Bandfördervorrichtung verlängernde Randsteg des Zwischenstückes aufliegt. Hierdurch nämlich läßt sich trotz zumindest gleicher, wenn nicht die Möglichkeit einer weiteren Verringerung der Profilwandstärke mit entsprechender Gewichtsreduzierung bietender Größe der zur Verwendung kommenden Profilquerschnitte höchst einfach und wirtschaftlich eine weitere Steigerung der Verformungssteifigkeit der erfindungsgemäßen Rahmenkonstruktion erreichen. Für den letztbeschriebenen Fall der Verwendung eines als C-Profil ausgebildeten Zwischenstückes ist darauf hinzuweisen, daß dann zweckmäßig zumindest die Anschlagbereiche der Anschlußflansche der Längsholmprofile jeweils mit dem aufliegenden Randsteg des Zwischenstückes, vorzugsweise aber auch jeweils die Mittelbereiche der Anschlußflansche der Längsholmprofile jeweils mit dem zugeordneten Seitensteg des Zwischenstückes, verbunden sein sollten, und zwar dies kraftschlüssig und/oder formschlüssig.

Die Längsholmprofile können im Rahmen der Erfindung zweckmäßig sowohl als Biege- und/oder Stanzformlinge aus Blech oder Kunststoffmaterial, beispielsweise auch glasfaserverstärktem Kunststoff (GFK), mit oder ohne erforderlichenfalls zwischen- oder nachgeschaltetem Tiefzieharbeitsgang ausgebildet sein oder durch Strangpress- oder -ziehprofile vorzugsweise aus Metall, für insbesondere Kleinförderer aber auch aus geeignetem Kunststoffmaterial gebildet sein. Insbesondere im ersteren Fall können in weiterer aufgabengerechter Fortbildung der Erfindung die für den erfindungsgemäßen Rahmen zum Einsatz kommenden Längsholmprofile gleichzeitig auch noch zu weiteren Aufgaben herangezogen werden, indem gemäß einem anderen untergeordneten Erfindungsgedanken zumindest eines der Längsholmprofile im Bereich seines längeren Seitensteges mindestens eine etwa topfartige Einbauchung ins Profilinnere hinein oder Ausbauchung aus diesem heraus mit etwa kreisförmiger Randkontur und vorzugsweise einem Mittelpunktsloch oder mit etwa elliptischer Randkontur und vorzugweise mindestens zwei auf der längeren Achse derselben angeordneten Löchern oder einem sich beidseitig derselben erstreckenden, vorzugsweise symmetrisch zu dieser gelegenenen schlitzartigen Langloch aufweist. Hierdurch lassen sich nicht nur an Stellen etwa zu erwartender erhöhter Verformungsbelastungen der Längsholmprofile ohne Vergrößerung der Masse des Profilmaterials und damit des Gewichtes desselben erwünschte Steigerungen der Verformungssteifigkeit erreichen, sondern es wird hierdurch gleichzeitig auch die Möglichkeit geboten, Lagerungen, Kupplungen oder andere benötigte oder erwünschte Maschinenelemente in mehr oder weniger verdeckter Lage und somit gegen unbefugten oder unbeabsichtigten Zugriff gesichert und entsprechend arbeitsschutzfreundlich im Inneren des Profilbereiches der Rahmenlängsholme unterzubringen.

Gleiches ist auch möglich gemäß einer Alternative zu diesem untergeordneten Erfingungsgedanken, nach der zumindest eines der Längsholmprofile im Bereich seines längeren Seitensteges mindestens eine in Richtung seiner Längsachse verlaufende etwa rinnenartige Einbauchung ins Profilinnere hinein oder Ausbauchung aus diesem heraus mit begrenzter oder sich über die gesamte Länge des Längsholmprofils erstreckender eigener Länge aufweist. Diese Ausführung bietet den zusätzlichen Vorteil, daß die Anordnung des im Tiefenbereich des Längsholmprofils unterzubringenden Maschinenelementes oder sonstigen Bauteils od. dgl. im Rahmen der Länge der rinnenartigen Einbauchung oder Ausbauchung desselben variabel ist, was bei Lagerhaltung nur einer einzigen Profilart oder einer geringen Zahl unterschiedlicher Profilausführungen der Universalität in bezug auf die Vielfalt hieraus erstellbarer Rahmenkonstruktionen für Bandfördervorrichtungen vorteilhaft zugute kommen kann, wobei die Rationalisierungsmöglichkeiten insbesondere im Hinblick auf Lagerhaltung an Profilmaterial, Einstandskosten für dieses und Montageaufwand erfahrungsgemäß recht erheblich sein können.

Insbesondere aus Gründen guter Kraftflußleitung ebenso wie spezieller Vereinfachung der Profilherstellung hat es sich als besonders zweckmäßig erwiesen, wenn in weiterer Ausgestaltung dieses letztbeschriebenen untergeordneten Erfindungsgedankens die Einbauchung(en) bzw. Ausbauchung(en) schräge Übergangsbereiche zwischen einem ebenen Mittelbereich und den benachbarten Bereichen des längeren Seitensteges des Längsholmprofils aufweist bzw. aufweisen. Ferner kann mit Vorzug im ebenen Mittelbereich der Einbauchung bzw. Ausbauchung mindestens eine Reihe von Durchgangs- oder Gewindelöchern in regelmäßigem Abstand zueinander vorgesehen sein.

Falls erforderlich, können gemäß einem weiteren untergeordneten Erfindungsgedanken die Längsholmprofile im Bereich ihres Decksteges und/oder ihres die Seitenfläche des Rahmens bildenden Außensteges und/oder ihres unteren Randflansches mindestens eine vorzugsweise mittelpunkt- oder mittelliniensymmetrische sickenartige Ein- oder Ausbauchung in Anordnung längs der Längsachse des Längsholmprofils aufweisen. Die Wahl der Form und Anordnung wird dabei der Fachmann entsprechend den für den jeweiligen Einsatzfall zu erwartenden Belastungen wählen, wobei allerdings nicht zu verkennen ist, daß solche Versteifungssicken durchaus auch noch weitere betriebliche Funktionen der Bandfördervorrichtung nach der Erfindung mitübernehmen können, wie beispielsweise dann, wenn die Deckflansche der Längsholmprofile mit sich in Längsrichtung derselben erstreckenden linienförmigen Ausbauchungen ausgestattet sind, die dann gleichzeitig als den Lauf des Obertrums des Fördermittels führende Randbegrenzungen für dieses dienen können.

Weiterhin hat es sich für bestimmte Einsatzfälle als besonders zweckmäßig, weil extrem dünnwandiges Material für das Zwischenstück ermöglichend erwiesen, wenn gemäß einem anderen untergeordneten Erfindungsgedanken dieses in seinem mittleren Bereich durch mindestens eine Quertraverse, vorzugsweise eine Mehrzahl von in Rahmenlängsrichtung in Abstand zueinander angeordneten Quertraversen, abgestützt ist.

In der Mehrzahl der Einsatzfälle wird eine Ausführungsform des Rahmens nach der Erfindung ausreichend sein, bei der die Längsholmprofile über praktisch der gesamten Rahmenlänge einstückig ausgebildet sind, es können sich insbesondere aufgrund von Forderungen des Einsatzgebietes einer einen solchen Rahmen nach der Erfindung enthaltenden Bandfördervorrichtung jedoch auch Ausführungsformen der Erfindung empfehlen, bei denen die Längsholmprofile über der Rahmenlänge mehrteilig ausgebildet sind. Dabei hat es sich als besonders zweckmäßig erwiesen, wenn das Zwischenstück über praktisch der gesamten Rahmenlänge einstückig ausgebildet ist und dadurch als Verbindungselement für benachbarte Teilstücke der mehrteiligen Längsholmprofile dient oder alternativ hierzu gleichfalls mehrteilig ausgebildet ist und Teilstücke desselben jeweils eine Stoßstelle benachbarter Teilstücke der mehrteiligen Längsholmprofile als Verbindungselement übergreifend angeordnet sind.

Im folgenden wird die Erfindung anhand einiger bevorzugter Ausführungsbeispiele, die in den Zeichnungen schematisch dargestellt sind, rein beispielsweise näher beschrieben. Dabei zeigen :

Fig. 1 in schaubildlicher Darstellung eine Ausführung eines mit für die Funktion einer Bandfördervorrichtung erforderlichen Bauteilen ausgerüsteten Stückes eines Bandfördervorrichtungs-Rahmens nach der Erfindung, und

Fig. 2 bis 10 jeweils in schematischer Stirnansicht weitere Ausführungsbeispiele von Rahmenkonstruktionen nach der Erfindung.

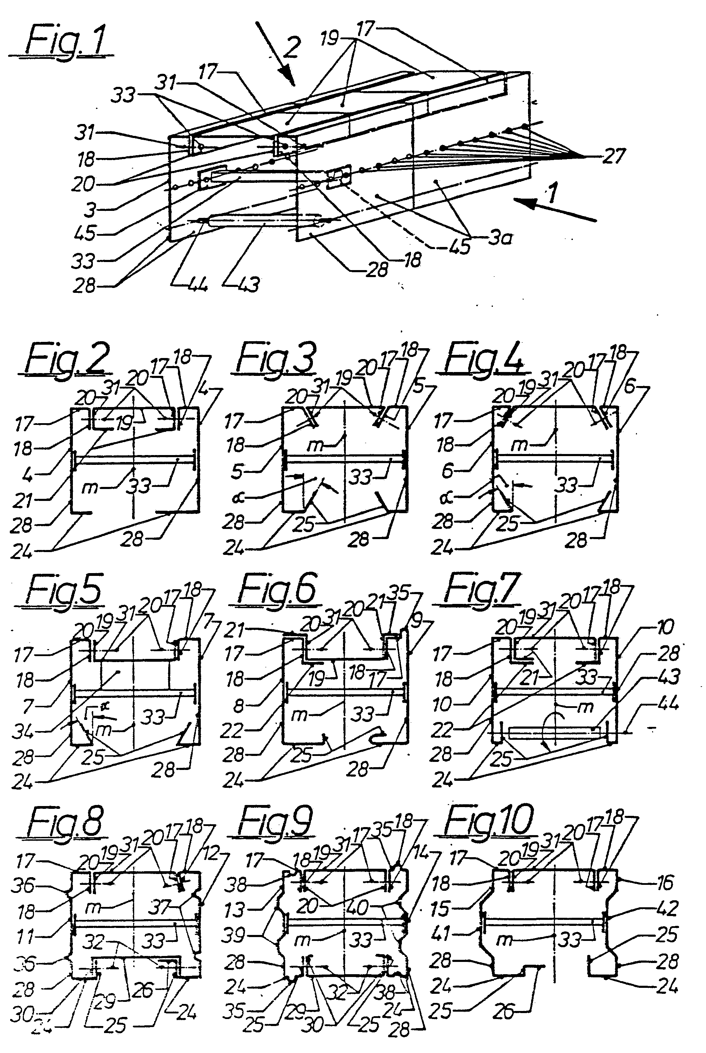

Mit 1 ist als Ganzes die Bandfördervorrichtung bezeichnet, von der in Fig. 1 ein Stück ihres als Ganzes mit 2 bezeichneter Rahmens dargestellt ist. Dieser ist beim wiedergegebenen Ausführungsbeispiel aus mehreren in Rahmenlängsrichtung hintereinander angeordneten Paaren von Längsholmprofil-Stücken 3a, von denen in Fig. 1 lediglich zwei dargestellt sind, und diese auf dem gewünschten bzw. benötigten Abstand haltenden Quertraversen 33 sowie mehreren in Rahmenlängsrichtung hintereinander angeordneten Zwischenstücken 19 angepasster Breite gebildet. Die Längsholmprofile 3 des Rahmens 2 sind beim Ausführungsbeispiel gemäß Fig. 1 in einfachster Weise als U-Profile mit unterschiedlich langen Seitenstegen ausgeführt, die so angeordnet sind, daß jeweils ihr längerer Seitensteg 28 als Außensteg der Rahmenkonstruktion etwa parallel zur Mittellängsebene des Rahmens 2 zu liegen kommt, die normal zur Ebene des Fördermittels liegt, während jeweils ihr zu diesem längeren Seitensteg 28 etwa paralleler kürzerer Seitensteg 18 bei das sich nach unten hin öffene U-Profil 3 nach oben hin schließendem Decksteg 17 dem gegenüberliegenden Längsholmprofil 3 zugewandt liegt. Etwa im Mittelbereich der längeren Schenkel 28 der U-förmigen Längsholmprofile 3 ist eine Reihe von in regelmäßigem Abstand angeordneten Durchgangslöchern 27 vorgesehen, die unter anderem dazu dienen, nicht dargestellte Schraubelemente aufzunehmen, mittels derer die beide Längsholmprofile 3 auf dem gewünschten bzw. benötigten Abstand zueinander haltenden Quertraversen 33 mittels ihrer Anschlußflansche 45 verschraubt sind.

Der Zwischenraum zwischen den beiden einander zugewandten kürzeren Seitenstegen 18 der beiden Längsholmprofile 3 wird durch eine Anzahl Zwischenstücke 19 überbrückt, deren Breite komplementär zum durch die Quertraversen 33 bestimmten Abstand der längeren Seitenstege 28 der Längsholmprofile 3 unter Berücksichtigung der jeweiligen Breite von deren Deckstegen 17 gewählt ist und deren Seitenstege 20 komplementär zu dem zugeordneten Seitensteg 18 des jeweils benachbarten Längsholmprofils 3 ausgebildet sind. Dabei sind bei diesem Ausführungsbeispiel jeweils die als Anschlußflansch dienenden kürzeren Seitenstege 18 der Längsholmprofile 3 und Seitenstege 20 eines Zwischenstückes 19 durch lediglich durch ihre strichpunktierte Mittellinie angedeutete Schraubelemente 31 formschlüssig miteinander verbunden, die in zueinander fluchtender Anordnung in beiden miteinander zu verbindenden Flanschen bzw. Stegen 18 bzw.

20 vorgesehene Durchgangslöcher 33 durchgreifen.

Da die Rahmenlängsholme 3 jeweils aus mehreren Teilstücken 3a gebildet sind, was den Vorteil der Lagerhaltung genormter Längsholmprofillängen und deren Verwendung in für die Erstellung einer gewünschten Rahmenlänge geeigneter Anzahl und Anordnung mit sich bringt, sind die Zwischenstücke 19 zusätzlich zu ihrer Aussteifungsfunktion zwecks Rahmenbildung überhaupt auch noch zu dem Zweck herangezogen, als Verbindungselemente zwischen in Rahmenlängsrichtung aufeinander folgenden Längsholmteilstücken 3a zu dienen, indem sie bei im Vergleich zur Länge derselben geringerer Länge den Stoßbereich zweier benachbarter Längsholmprofilteilstücke 3a überdeckend angeordnet sind, wie in Fig. 1 für das mittlere der drei wiedergegebenen Zwischenstücke 19 dargestellt.

Im übrigen können sowohl die längeren Seitenstege 28 als bevorzugt auch die als Anschlußflansche dienenden kürzeren Seitenstege 18 nicht parallel zueinander, sondern mit zu einander konvergierender oder divergierender Neigung ausgeführt sein, wobei dann allerdings die Zwischenstücke 19 komplementär abgekröpfte bzw. abgewinkelte Seitenstege 20 aufzuweisen haben. Weiterhin ist hervorzuheben, daß statt der angedeuteten formschlüssigen Verbindung von Zwischenstücken 19 und beidseitig benachbarten Längsholmprofilen 3 in Form der Verschraubungen 31 oder zusätzlich zu diesen auch eine kraftschlüssige Verbindung der Anschlußflansche 18 der Längsholmprofile 3 mit den Seitenstegen 20 der Zwischenstücke 19 beispielsweise durch geeignete Verklebung vorgesehen sein kann. Eine solche Ausführung kann sich besonders für vom Herstellerwerk fertig montiert anzuliefernde Rahmenkonstruktionen empfehlen.

Ungeachtet dessen, ob und in welcher Weise die Verbindung zwischen Zwischenstücken 19 und benachbarten Längsholmprofilen 3 kraft- und/oder formschlüssig ausgebildet ist, kann zweckmäßig ein leichtes Divergieren der miteinander zu verbindenden Flansche 18 bzw. Seitenstege 20 zu ihren freien Rändern hin vorgesehen sein, da hierdurch dem gebildeten Halbkastenprofil der Rahmenkonstruktion eine auf Konvergieren der freien Ränder der längeren Seitenstege 28 dieses Halbkastenprofils gerichtete Vorspannung vermittelt wird, die dadurch, daß zwischen diese Seitenstege 28 die den genauen Außenabstand derselben bestimmenden Quertraversen 33 eingefügt werden, den miteinander verbundenen Anschlußflanschen 18 und Seitenstegen 20 eine auf Lösen dieser Verbindung derselben gerichtete Vorspannung aufprägen, welche ihrerseits überraschenderweise dem gesamten so gebildeten Halbkastenprofil eine gesteigerte Biege- und Torsionssteifigkeit vermittelt.

In Fig. 1 ist ferner noch eine in geeigneter herkömmlicher Weise an den längeren Seitenstegen 28 der beiden sich gegenüberliegenden Längsholmprofile 3 gelagerte Andrück- und/oder Führungswalze 43 für das Untertrum des nicht dargestellten Fördermittels mit ihrer Achse 44 gelagert.

Die gleichen Gesichtspunkte gelten für die in Fig. 2 bis Fig. 10 angedeuteten weiteren Ausführungsformen von Rahmen nach der Erfindung, bei denen die gleichen vorstehend bereits beschriebenen Maßnahmen einzeln oder in Kombination miteinander verwirklicht sein können. Gleiche Einzelheiten der betreffenden Ausführungsformen sind jeweils mit dem selben Bezugszeichen gekennzeichnet.

Die Ausführung gemäß Fig. 2 unterscheidet sich von der gemäß Fig. 1 grundsätzlich nur dadurch, daß die hier mit 4 bezeichneten Längsholmprofile jeweils einen das freie Ende ihres längeren Seitensteges 28 verlängernden Randflansch 24 aufweisen. In Fig. 2 ist auf der linken Seite angedeutet, daß der Randflansch eine verhältnismäßig kurze Länge aufweisen kann, die je nach geforderten Verformungswiderstandseigenschaften des Längsholmprofils und dabei bevorzugt auch so gewählt wird, daß sie zumindest den Zwischenraum zwischen Innenoberfläche des längeren Seitensteges 28 des Längsholmprofils 4 und der benachbarten Stirnseite einer etwa vorgesehenen Andrück- und/oder Führungswalze 43 schützend überdeckt, während auf der rechten Seite von Fig. 2 veranschaulicht ist, daß der Randflansch 24 auch eine größere Länge aufweisen kann, die im übrigen sogar so weit gehend kann, daß die gesamte Länge einer solchen Andrück- bzw. Führungswalze vor unbefugtem Zugriff schützend überdeckt wird. Und schließlich ist in Fig. 2 auch noch angedeutet, daß statt eines als U-Profil ausgebildeten Mittelstückes 19, wie in Fig. 1 dargestellt, auch ein als C-Profil ausgeführtes Zwischenstück 19 Verwendung finden kann, wenn dies aus konstruktionstechnischen Gründen oder aber wegen gezielter Nutzung auf Lager vorhandener Materialvorräte für zweckmäßig erachtet wird.

Die Rahmenausführung gemäß Fig. 3 unterscheidet sich von der gemäß Fig. 2 in zweierlei Hinsicht. Einerseits nämlich sind, wie dargestellt, die Anschlußflansche der hier mit 5 bezeichneten Längsholmprofile mit Neigung gegenüber der zur Ebene des nicht dargestellten Fördermittels, beispielsweise eines Förderbandes, normalen Mittellängseben m des Rahmens 2 ausgeführt, und zwar mit zu dieser hin verlaufender bzw. bezüglich des korrespondierenden Anschlußflansches 18 des gegenüberliegenden Längsholmprofils 15 konvergierender Neigung. Der Neigungswinkel α kann dabei zweckmäßig bis etwa 30° betragen, obgleich auch steilere oder flachere Neigungen möglich sind. Wie ersichtlich, sind die Seitenstege 20 der Zwischenstücke 19 komplementär konturiert. Eine solche Ausführung kann besonders im Hinblick auf eine Vereinfachung der Ausrichtung der Zwischenstücke 19 bezüglich der benachbarten Längsholmprofile 5 bei der Montage des Rahmens 2 zweckmäßig sein. Es ist erkennbar, daß die Schraubelemente 31 hier eine schrägachsige Anordnung haben, die im übrigen gleichfalls montagemäßige Vorteile aufweisen kann.

Und zum anderen sind die Randflansche 24 der Längsholmprofile 5 derart nach oben, das heißt ins Rahmeninnere hinein abgebogen bzw. abgekröpft, daß sich ein der Verbesserung der Verformungssteifigkeit der gesamten Rahmenkonstruktion förderlicher Versteifungsflansch 25 ergibt, der im übrigen, wie dargestellt, spiegelbildlich zum Anschlußflansch 18 des betreffenden Längsholmprofils 5 ausgebildet sein kann, so daß dieses sowohl für Rechts- als auch für Linksanbau Verwendung finden kann. Es sind aber auch andere Ausführungen von Versteifungsflanschen 25 als die in Fig. 3 dargestellte möglich, und zwar dies sowohl hinsichtlich Abkröpfwinkel α und/oder Formgebung und/oder Länge desselben.

Die Rahmenausführung gemäß Fig. 4 entspricht der gemäß Fig. 3 mit der Maßgabe, daß hier die Anschlußflansche 18 der hier mit 6 bezeichneten Längsholmprofile von der Mittellängsebene m des Rahmens 2 bzw. der Bandfördervorrichtung 1 weg bzw. auf den Steg 28 zu bzw. bezüglich des korrespondierenden Anschlußflansches 18 des gegenüberliegenden Längsholmprofils 6 zu ihren freien Rändern hin divergierend ausgeführt sind und daß auch die jeweils einen Randflansch 24 verlängernden Versteifungsflansche 25 in gleicher Weise in Richtung auf den Profilsteg 28 zu verlaufen. Auch hier beträgt dabei der Neigungswinkel α gegenüber der Mittellängsebene m mit Vorzug bis zu 30° und kann aus den gleichen Gründen wie bei der Ausführung gemäß Fig. 3 Randflansch 24 mit Versteifungsflansch 25 korrespondierend zum Decksteg 17 mit Anschlußflansch 18 des jeweiligen Längsholmprofils 6 ausgebildet sein. Ersichtlich ist auch hier das dargestellte Zwischenstück 19 hinsichtlich seiner Seitenstege 20 an die Formgebung des zugeordneten Anschlußflansches 18 des benachbarten Längsholmprofils 6 angepasst. Wie ersichtlich ist auch hier die Anordnung der für formschlüssige Verbindung vorgesehenen Schraubelemente 31 schrägachsig.

Bei der in Fig. 5 wiedergegebenen Rahmenausführung ist gezeigt, daß die hier mit 7 bezeichneten Längsholmprofile auch in beliebiger geeigneter Weise unsymmetrisch ausgebildet sein können, wobei dies am Beispiel einer Kombination einer Ausführung des obenliegenden Bereiches des Längsholmprofils gemäß Fig. 1 mit einem untenliegenden Bereich gemäß Fig. 4 zur Erzielung des Längsholmprofils 7 gemäß Fig. 5 gezeigt ist. Weiterhin ist in Fig. 5 rein beispielsweise gezeigt, daß ein als U-Profil ausgebildetes Zwischenstück 19 auch in umgekehrter Anordnung als in Fig. 1 zur Verwendung kommen kann, indem es nämlich mit nach oben offenem Profilinnerem an den zugeordneten Anschlußflanschen 18 der benachbarten Längsholmprofile 7 beispielsweise mittels Schraubelementen 31 formschlüssig festgelegt ist. Um das dargestellte Zwischenstück 19 als Profil mit extrem geringer Wandstärke ausführen zu können, ohne seine rahmenbildende Funktion zu beeinträchtigen, kann, wie in Fig. 5 gezeigt, dieses Zwischenstück 19 auf seiner Unterseite von der Quertraverse 33 abgestützt sein, indem es auf einem Zwischenfütterungsstück 34, das an der Quertraverse 33 festgelegt ist, aufliegt. Hierdurch kann im übrigen gleichfalls positiv zur Erleichterung der Montage beigetragen werden, weil durch die die Auflagefläche für das Zwischenstück 19 bildende Stirnfläche des Futterstückes 34 eine vorbestimmte Höhenlage für das Zwischenstück 19 definiert sein kann, wodurch sich bei der Montage desselben langwierige Justier- und Ausrichtarbeiten erübrigen.

In diesem Zusammenhang ist darauf hinzuweisen, daß eine solche Anordnung des Zwischenstückes 19 zwar keineswegs den Einsatz in Verbindung mit elastisch biegsamen Fördermitteln, wie beispielsweise Förderbändern oder Fördergurten, ausschließt, sich jedoch besonders für Einsatz in Verbindung mit Platten- oder Scharnierbändern als Fördermittel eignet, indem nämlich durch das nach oben hin offene Profilinnere des Zwischenstückes 19 ein nach unten geschlossener und demgemäß Durchfall von unerwünschten Partikeln verhindernder Laufkanal für die Anlenkungen bzw. Scharniere eines solchen Fördermittels geboten wird, wobei im übrigen vorteilhaft der so gebildete Kanal auch noch als Förderrinne für den Austrag von in sie gelangtem Fremdgut, wie beispielsweise Scherben oder Bruchstücken von auf dem Fördermittel transportiertem Förderstückgut, dienen kann.

Auch die beiden aus Fig. 6 ersichtlichen Rahmenausführungen sind insbesondere für Fördermittel in Form von Platten- oder Scharnierbändern konzipiert, jedoch nicht auf diese Einsatzart beschränkt. Bei der in Fig. 6 rechts wiedergegebenen Ausführung eines hier mit 9 bezeichneten Längsholmprofils ist ein im wesentlichen dem Längsholmprofil 4 gemäß Fig. 2 entsprechendes Profil verwandt, das jedoch insoweit abgewandelt ist, als sein Decksteg 17 im Bereich seines außenliegenden Randes eine sickenartige Versteifungsausbauchung 35 und der untenliegende Randflansch 24 einen zur Profilversteifung ebenso wie zur Vermeidung einer scharfen Randkante auf sich selbst umgefalzten Randbereich 25 aufweist. Die Ausführung des Zwischenstückes 19 könnte die gleiche sein wie bei Fig. 5. Dargestellt ist jedoch eine andere Ausführung, bei welcher der Seitensteg 20 des Zwischenstückes 19 einen nach außen abgekröpften Tragflansch 21 aufweist, mit welchem es auf dem Decksteg 17 des benachbarten Längsholmprofils 9 aufliegt und sich dort abstützt, wobei die gleichen Vorteile hinsichtlich der Erleichterung der Montage durch Vermeidung aufwendiger Ausricht- und Justierarbeiten erzielt werden wie bei einer Unterstützung durch die Quertraversen 33 beispielsweise gemäß Fig. 5.

Bei der in Fig. 6 links dargestellten Ausführung ist eine andere Auflageunterstützung des ansonsten im übrigen in der gleichen Weise wie bei der Ausführung gemäß Fig. 6 rechts ausgebildeten Zwischenstückes 19 gewählt, indem die hier mit 8 bezeichneten Längsholmprofile einen zu einem Anschlagbereich 22 abgewinkelten bzw. abgekröpften Seitensteg 20 aufweisen. Wie dargestellt, kann dabei das Zwischenstück 19 mit seinem Tragflansch 21 auf dem Decksteg 17 des benachbarten Längsholmprofils 8 aufliegend sich gegenüber diesem abstützen, wobei dann der Tragflansch 22 hohl liegen kann und lediglich die Funktion einer weiteren Verbesserung der Eigensteifigkeit der Rahmenkonstruktion hat und die Verbindung zwischen Zwischenstück 19 und zugeordnetem Seitensteg 18 des benachbarten Längsholmprofils 8 über etwa mittelstegparallele Schraubelemente 31 formschlüssig erfolgt. Oder aber es können die Anschlagbereiche 22 der Seitenstege 18 der Längsholmprofile 8 auch noch als Auflageunterstützungen für das Zwischenstück 19 dienen, indem dessen Seitenstege 20 höhenmäßig so konturiert sind, daß dann, wenn sein Mittelstegbereich auf den Anschlagbereichen 22 der Längsholmprofile 8 aufliegt, die Tragflansche 21 des Zwischenstückes 19 bezüglich der Deckstege 17 der zugeordneten Längsholmprofile 8 hohl liegen und lediglich eine Führungsfunktion für die auf ihnen aufliegenden Seitenbereiche des nicht dargestellten Fördermittels haben. Die Festlegung von Zwischenstück 19 und benachbarten Längsholmprofilen 8 kann dann entweder mittellängsebeneparallel und/oder mittellängsebenennormal erfolgen, wie durch die strichpunktierten Linien 31 angedeutet.

Außerdem weist das Längsholmprofil 8 gemäß Fig. 6 noch die Besonderheit auf, daß sein untenliegender Randflansch 24 nur einen sehr schmalen und zudem auch noch etwa mittellängsebenenparallel ins Rahmeninnere hineinragenden Versteifungsflansch aufweist.

Die Rahmenausführung gemäß Fig. 7 entspricht grundsätzlich der gemäß Fig. 6 links, indem nämlich die hier mit 10 bezeichneten Längsholmprofile praktisch die gleiche Querschnittsausbildung haben wie die Längsholmprofile 8 gemäß Fig. 6 links, dies allerdings mit der Ausnahme, daß die untenliegenden Randflansche 24 der Längsholmprofile 10 wesentlich kürzer gehalten sind als bei denen der Längsholmprofile 8, um ein Eingreifen der diese randseitig verlängernden, nach oben bzw. ins Rahmeninnere abgebogenen bzw. abgekröpften Versteifungsflansche 25 in den Raum zwischen den Stegen 28 beider sich gegenüberliegenden Längsholmprofile 10 mit nur geringem Abstand zu diesen Stegen 28 zu ermöglichen. Dies hat den Zweck, die Versteifungsflansche 25 als Trag- bzw. Stützelemente für in Fig. 7 nur schematisch angedeutete Achsen 44 von Andrück- und/oder Führungswalzen oder -rollen 43 mitzunutzen, indem diese Versteifungsflansche 25 in Fig. 7 nicht dargestellte Achsaufnahmen für die Achsen 44 der Walzen bzw. Rollen 43 beispielsweise in Form von sich zu ihren nach oben weisenden freien Rändern hin öffnenden schlitzartigen Ausnehmungen aufweisen, in welche zwecks Erleichterung der Montage die Walzen bzw. Rollen 43 mit ihren Achsen 44 oder deren Lagerungen nur einfach von oben her eingehängt zu werden brauchen.

In Fig. 7 ist lediglich beispielsweise auch noch verdeutlicht, daß ein in geeigneter Weise als C-Profil (Fig. 7 links) oder als U-Profil (Fig. 7 rechts) ausgebildetes Zwischenstück 19 auf die Anschlagbereiche 22 der Anschlußflansche 18 der Längsholmprofile 10 aufgelegt sein kann. Dabei kann in der gleichen Weise, wie bereits im Zusammenhang mit der Ausführung gemäß Fig. 6 links vorstehend beschrieben, die Verbindung zwischen Zwischenstück 19 und benachbarten Längsholmprofilen 10 durch geeignete, vorzugsweise formschlüssige Verbindung der Seitenstege 20 des Zwischenstückes 19 mit dem zugeordneten Anschlußflansch 18 des benachbarten Längsholmprofils 10 erfolgen, wobei im Falle eines als C-Profil ausgebildeten Zwischenstückes 19 auch eine entsprechende Verbindung des Tragflansches 21 des Zwischenstückes 19 mit dem Anschlagbereich 22 des Anschlußflansches 18 des betreffenden Längsholmprofils 10 vorgenommen werden kann, wie durch die strich-punktierten Linien in Fig. 7 links angedeutet.

In Fig. 7 rechts ist gezeigt, daß ein Zwischenstück 19 auch in U-Profil-Ausführung mit nach unten, das heißt in Richtung auf die Quertraverse 33 zu gerichteter Profilöffnung sich auf dem Anschlagbereich 22 des Anschlußflansches 18 des zugeordneten Längsholmprofils 10 abstützen kann und die rahmenbildende Verbindung der Bauteile über die komplementär zueinander liegenden Flansche bzw. Stege 18 bzw. 20 erfolgt, wie durch die strich-punktierte Linie 31 angedeutet.

Auch die Rahmenausführung gemäß Fig. 8 links entspricht grundsätzlich der gemäß Fig. 6 links, wobei allerdings hier lediglich beispielhaft die Möglichkeit angedeutet ist, zur weiteren Profilversteifung erforderlichenfalls im Steg 28 des hier mit 11 bezeichneten Längsholmprofils sickenartige Ausbauchungen 36 des Profilmaterials vorzusehen, wobei die Darstellung dieser Versteifungssicken 36 in Fig. 8 links sowohl eine mittelpunktsymmetrische Ausführung derselben als auch einen Schnitt durch oder eine Stirnansicht von eine(r) Versteifungssicke mit sich in Rahmenlängsrichtung erstreckender Längsausdehnung und entsprechend mittelliniensymmetrischer Ausführung bedeuten und dabei die Länge dieser Versteifungssicken 36 in Rahmenlängsrichtung begrenzt sein oder diese die gesamte Länge des betreffenden Längsholmprofils 11 durchlaufen kann.

Die Rahmenausführung gemäß Fig. 8 rechts entspricht im wesentlichen der gemäß Fig. 4, dies jedoch mit der Maßgabe, daß sich der Seitensteg 20 anders als bei Fig. 4 etwa parallel zum Steg 28 des hier mit 12 bezeichneten Längsholmprofils erstreckt und in einen in Richtung von diesem weg abgebogenen bzw. abgekröpften Rastbereich 26 endet. Dieser dient einerseits zur Verbesserung der Verformungswiderstandseigenschaften des gesamten Rahmengebildes. Zum anderen aber kann er auch, wie in Fig. 8 rechts angedeutet, als Auflage für ein als U-Profil ausgebildetes Bodenteil 29 dienen, das mit seinem Mittelsteg auf dem Rastbereich 26 des Versteifungssteges 25 des Längsholmprofils 12 ruhend mit seinem Seitensteg 30 den Versteifungsflansch 25 des Längsholmprofils 12 hintergreifen kann. Dabei braucht immer dann, wenn es auf eine rahmenbildende Funktion des Bodenteils 29 nicht ankommt, dieses nur lose in das Rahmeninnere eingeschoben zu sein, ohne eine Verbindung mit den einander gegenüberliegenden Längsholmprofilen zu haben. Andererseits kann aber das Bodenteil 29 zweckmäßig auch zur Verbesserung der Verformungssteifigkeit des Rahmengebildes herangezogen werden, um die Möglichkeit für weitere Verringerung des Materialquerschnittes der anderen rahmenbildenden Bauteile zu eröffnen. In einem solchen Fall sind dann jedenfalls die Seitenstege 30 des Bodenteils 29 mit den Versteifungsflanschen 25 der Längsholmprofile 11 bzw. 12 zu verbinden, während zusätzlich auch noch eine Verbindung des Mittelsteges des Bodenteils 29 mit dem Rastbereich 26 des Versteifungsflansches 25 des Längsholmprofils 12 vorgesehen sein kann. Bei der Ausführung gemäß Fig. 8 links weist der Versteifungsflansch 25 des Längsholmprofils 11 keine Verlängerung durch einen Rastbereich auf, jedoch ist die Aufnahme und Funktionsweise einschließlich der Art der Verbindung von Bodenteil 29 und Versteifungsflansch 25 des Längsholmprofils 11 die gleiche und entspricht der Ausführung gemäß Fig. 7 rechts bezüglich der Verbindung von Zwischenstück 19 und benachbartem Längsholmprofil 10. Da der Zugang zum Rahmeninneren von unten her zu Montagezwecken und aus Inspektions- und Wartungsgründen gewahrt bleiben sollte, wird bevorzugt eine schnell lösbare Verbindung zwischen Bodenteil 29 und benachbarten Längsholmprofilen 11 bzw. 12 vorgesehen, die mit Vorzug formschlüssig ausgebildet ist. Die Arten der Verbindungsmöglichkeiten sind in bereits beschriebener Weise durch Schraubelemente 32 symbolisierende strich-punktierte Linien angedeutet.

In Fig. 8 rechts sind außerdem auch noch Versteifungssicken im Steg 28 des Längsholmprofils 12 in Form von sich ins Profilinnere hinein erstreckenden Einbauchungen 37 dargestellt. Für diese gilt hinsichtlich Formgebung und Längenausdehnung das Gleiche wie für die sickenartigen Ausbauchungen 36 der Ausführung gemäß Fig. 8 links.

Die Rahmenausführung gemäß Fig. 9 entspricht grundsätzlich der gemäß Fig. 5, dies jedoch mit der Maßgabe, daß anders als bei Fig. 5 der den untenliegenden Randflansch 24 verlängernde Versteifungsflansch 25 nicht gegenüber dem Profilsteg 28 geneigt, sondern zu diesem praktisch parallel verläuft. Das in Fig. 9 links wiedergegebene, mit 13 bezeichnete Längsholmprofil kann, wie dargestellt, in seinem Decksteg 17 eine sich ins Profilinnere hinein erstreckende sickenartige Einbauchung und eine sickenartige Ausbauchung 35 des Randflansches 24 aufweisen. Die Anordnung kann aber auch, wie bei dem in Fig. 9 rechts dargestellten und mit 14 bezeichneten Längsholmprofil, umgekehrt sein, indem der Deckflansch 17 desselben eine sickenartige Ausbauchung 35 und der Randflansch 24 eine sickenartige Einbauchung 38 ins Profilinnere hinein aufweist. Dabei gilt für die Versteifungssicken 35 bzw. 38 hinsichtlich Formgebung und Längenausdehnung das Gleiche, wie bereits bezüglich der Versteifungssicken 36 bzw. 37 gemäß Fig. 8 erläutert. Bezüglich der Ausführung gemäß Fig. 9 rechts ist darauf hinzuweisen, daß insbesondere bei Längsausdehnung der sickenartigen Ausbauchung 35 des Decksteges 17 des Längsholmprofils 14 diese in der gleichen Weise, wie für die Versteifungssicke 35 gemäß Fig. 6 rechts bereits erläutert, als Seitenführung für das Fördermittel herangezogen werden kann.

In Fig. 9 sind bei beiden Längsholmprofilen 13 bzw. 14 auch noch weitere Versteifungssicken angedeutet. So sind oberhalb und unterhalb eines beispielsweise für die Festlegung der Quertraverse 33 herangezogenen ebenen Mittelbereichs sickenartige Ausbauchungen 39 des Profilsteges 28 des Längsholmprofils 13 und beim Längsholmprofil 14 oberhalb und unterhalb des entsprechenden ebenen Mittelbereiches des Profilsteges 28 desselben sickenartige Einbauchungen 40 in das Profilinnere hinein vorgesehen, wobei diese Ausbauchungen 39 bzw. Einbauchungen 40 mit Vorzug so ausgeführt sein können, daß ihre Übergangsbereiche zu den in der Hauptebene des Profilsteges 28 verbleibenden Bereichen desselben schräge Übergangsbereiche aufweisen. Die Darstellungen der Ausbauchungen 39 und Einbauchungen 40 verdeutlichen, daß es sich einerseits um beispielsweise zur Achse der Quertraverse 33 mittelpunktkonzentrische ring- bzw. topfartige Tiefziehverformungen oder aber um je nach Herstellungsart des Längsholmprofils 13 bzw. 14 sich in Längsrichtung desselben erstreckende rinnenartige Verformungen handeln kann, die im letzteren Fall bei begrenzter Länge gleichfalls beispielsweise durch Tiefziehen eingebracht sein können, bei die Längsholmprofillänge übergreifender Länge jedoch mit Vorzug durch Walzverformung oder aber im Zuge der Herstellung des Längsholmprofils 13 bzw. 14 selbst im Wege beispielsweise des Strangziehens oder Strangpressens eingebracht sein können.

Die Art der Anordnung des als U-Profil dargestellten Zwischenstückes 19 und seine Verbindung mit den benachbarten Längsholmprofilen 13 bis 14 entspricht der gemäß Fig. 2. Die Art der Anordnung des hier als C-Profil ausgebildeten Bodenteils 29 und dessen Verbindung mit den benachbarten Längsholmprofilen 39 bzw. 40 entspricht abgesehen von der Unterstützung durch die Quertraverse 33 mit dem Futterstück 34 der Anordnung und Verbindung des Zwischenstückes 19 gemäß Fig. 5.

Die Rahmenausführung gemäß Fig. 10 rechts entspricht grundsätzlich der gemäß Fig. 8 links und die gemäß Fig. 10 links der gemäß Fig. 8 rechts. Im Unterschied zu den Längsholmprofilen 11 bzw. 12 gemäß Fig. 8 weisen die bei der Ausführung gemäß Fig. 10 mit 15 bzw. 16 bezeichneten Längsholmprofile keine kleineren Verstärkungssicken 36 bzw. 37 auf. Vielmehr ist beim Längsholmprofil 15 gemäß Fig. 10 links der Profilsteg 28 desselben etwa in seinem Mittelbereich zu einer großflächigen Versteifungssicke 41 ausgebaucht, während in Fig. 10 rechts die umgekehrte Möglichkeit verdeutlicht ist, den Profilsteg 28 des Längsholmprofils 16 mit einer großflächigen Einbauchung 42 ins Profilinnere hinein als Versteifungssicke zu versehen. Auch hier weisen die Ausbauchung 41 bzw. die Einbauchung 42 schräge Übergangsbereiche von ihrem ebenen Zentralbereich zu den in der Hauptebene des jeweiligen Profilsteges 28 verbleibenden Bereichen auf. Auch hier können die dargestellte Ausbauchung 41 bzw. die Einbauchung 42 etwa topf- bzw. napfartige Verformungen des Materials des Profilsteges 28 darstellen, deren Umrißkontur etwa mittelpunktsymmetrisch beispielsweise zur Achse der Quertraverse 33 verlaufen kann, es können diese Versteifungssicken 41 bzw. 42 aber auch sich in Rahmenlängsrichtung erstreckende Verformungen begrenzter oder die Längsholmprofillänge übergreifender Länge sein. Dabei können im übrigen die Längsholmprofile sowohl bei der Ausführung gemäß Fig. 10 links als auch der gemäß Fig. 10 rechts symmetrisch ausgebildet sein, das heißt einen unten liegenden Randflansch 24 mit der Breite des Decksteges 17 entsprechender Breite aufweisen. Die Möglichkeiten für eine Anordnung eines Bodenteils sind die gleichen wie bei den Ausführungen gemäß Fig. 8 und 9, obgleich in Fig. 10 kein solches Bodenteil 29 dargestellt ist.

Im übrigen ist hervorzuheben, daß etwa vorzusehende Versteifungssicken sowohl bei Ausführung als Einbauchung als auch als Ausbauchung keineswegs eine der dargestellten Querschnittskonturierungen aufzuweisen brauchen, vielmehr je nach den Bedürfnissen des einzelnen Einsatz- bzw. Belastungsfalls und den Möglichkeiten der Herstellung des betreffenden Profils der Fachmann auch andere Sickenausführungen wählen mag. Ersichtlich ist jedoch nicht nur die Herstellung, sondern auch der montagemäßige Einsatz der nach der Erfindung zur Verwendung kommenden Profile besonders einfach und entsprechend kostengünstig ; Gleiches gilt für die Verbindungen der einzelnen Profilteile zu dem erfindungsgemäßen Rahmengebilde, die ohne Zwischenschaltung von zusätzlichen Bauteilen als Verbindungselementen od. dgl. kraftschlüssig allein durch beispielsweise Verklebung oder formschlüssig allein durch Nutzung marktgängiger und entsprechend preisgünstiger Schraubelemente hergestellt werden kann.

In den Fig. 1 bis 4 und 7 bis 10 sind jeweils Anordnungen der Zwischenstücke 19 gezeigt, bei denen deren Mittelsteg mit den zugeordneten Decksteges 17 der benachbarten Rahmenlängsholmprofile 3 bis 6 bzw. 10 bis 16 fluchtet. Dies ist zwar nicht unbedingt erforderlich, sofern das Fördermittel eine ausreichende Eigensteifigkeit und Standfestigkeit in Querrichtung besitzt, es hat sich jedoch diese fluchtende Anordnung insbesondere dann als zu bevorzugen erwiesen, wenn im Interesse der Nutzung eines möglichst dünnen oder weichen Fördermittels, dem entsprechende Selbsttrageigenschaften mangeln, diesem eine Unterstützung des gesamten Querschnittes seines fördergutbelasteten Obertrums geboten werden soll.

Weiterhin ist noch darauf hinzuweisen, daß in den Zeichnungen aus Gründen besserer Deutlichkeit und Übersichtlichkeit die jeweils miteinander zu verbindenden Stege bzw. Flansche der rahmenbildenden Bauteile bzw. Profile jeweils parallel zueinander verlaufend dargestellt sind, daß sie aber mit Vorzug in Richtung ihrer freien Ränder relativ zueinander leicht divergieren sollten, so daß dann, wenn die Verbindung der betreffenden Flansche bzw. Stege miteinander erstellt ist, sich im Verein mit den die Längsholmprofile 3 bis 16 auf dem gewünschten Abstand zu einander haltenden Quertraversen 33 eine auf Lösen der betreffenden Profilverbindungen gerichtete Vorspannung aufgebracht bzw. mit anderen Worten dem so gebildeten Halb- oder Vollkastenprofil die Tendenz vermittelt wird, in sich einen dem Kraftfluß in einem Rohrprofil weitestgehend angenäherten Vorspannkraftfluß zu leiten. Hierdurch läßt sich eine gewisse Verringerung der Profilwandstärken erzielen, welche vorteilhaft einer weiteren Gewichtseinsparung zugute kommt.

Im übrigen ist die Erfindung zwar anhand einiger bevorzugter Ausführungsbeispiele dargestellt und vorstehend erläutert worden, nicht jedoch auf diese beschränkt. Vielmehr stehen dem Fachmann vielfältige Möglichkeiten offen, sie durch andere Kombination ihrer Merkmale oder deren Austausch gegen gleichwertige Mittel, und zwar insbesondere auch durch andere Kombinationen der dargestellten Einzelheiten von Profilformen, an die jeweiligen material- und produktionstechnischen Gegebenheiten und/oder die Forderungen des einzelnen Einsatzfalls anzupassen, ohne dadurch den Rahmen der Erfindung zu verlassen. Insbesondere ist darauf zu verweisen, daß die Befestigungslöcher 27 für Quertraversen 33 und-/oder andere am Förderband-Tragrahmen 2 festzulegende Zusatzaggregate oder dergleichen keineswegs mittig bezüglich der Höhe des Tragrahmens bzw. dessen Längsholmprofils 3 bzw. 3a bzw. 4 bzw. 5 bzw. 6 bzw. 7 bzw. 8 bzw. 9 bzw. 10 bzw. 11 bzw. 12 bzw. 13 bzw. 14 bzw. 15 bzw. 16 und auch nicht in nur einer Reihe vorgesehen zu sein brauchen, wie rein beispielsweise in Fig. 1 dargestellt, sondern durchaus auch in anderer, vorzugsweise rastermäßiger Anordnung mit höherer oder tieferer einreihiger Lochleiste oder zwei oder mehr Lochleisten mit teilungsgleicher und/ oder teilungsunterschiedlicher und/oder vertikalausrichtungsgleicher oder versetzter Lochanordnung vorgesehen sein können.

**Patentansprüche**

1. Aus durch mit ihnen verschraubte Quertraversen (33) zusammengehaltenen Längsholmen gebildeter Rahmen (2) für Bandfördervorrichtungen (1), dessen Längsholme jeweils als in Richtung des Fördermittels offene Profile (3-16) mit einem Außensteg (28) und sich von dessen oberem Ende wegerstreckendem Decksteg (17) ausgebildet sind, dadurch gekennzeichnet, daß die Längsholmprofile (3-16) jeweils am freien Ende ihres Decksteges (17) einen sich von diesem weg nach unten erstreckenden Anschlußflansch (18) aufweisen und beide Längsholmprofile (3-16) mittels eines als U- oder C-Profil ausgebildeten Zwischenstückes (19) miteinander verbunden sind, dessen beide sich von seinem Mittelsteg etwa komplementär zum Anschlußflansch (18) des benachbarten Längsholmprofils (3 bzw. 4-16) wegerstreckende Seiten- und/oder Randstege (20 bzw. 21) jeweils mit diesem verbunden sind.

2. Rahmen nach Anspruch 1, dadurch gekennzeichnet, daß die Seitenstege (20) des Zwischenstückes (19) und der zugeordnete Anschlußflansch (18) des benachbarten Längsholmprofils (3 bzw. 4-16) jeweils kraftschlüssig miteinander verbunden sind.

3. Rahmen nach Anspruch 1 oder 2, dadurch gekennzeichnet, daß die Seitenstege (20) des Zwischenstückes (19) und der zugeordnete Anschlußflansch (18) des benachbarten Längsholmprofils (3 bzw. 4-16) jeweils formschlüssig miteinander verbunden sind.

4. Rahmen nach Anspruch 2 oder 3, dadurch gekennzeichnet, daß die Seitenstege (20) des Zwischenstückes (19) und der zugeordnete Anschlußflansch (18) des benachbarten Längsholmprofils (3 bzw. 4-16) jeweils miteinander verklebt sind.

5. Rahmen nach Anspruch 4 mit kraft- und formschlüssiger Verbindung der Seitenstege des Zwischenstückes und der zugeordneten Anschlußflansche der benachbarten Längsholmprofile, dadurch Gekennzeichnet, daß die Seitenstege (20) des Zwischenstückes (19) und der zugeordnete Anschlußflansch (18) des benachbarten Längsholmprofils (3 bzw. 4-16) jeweils mindestens eine aus einer vorzugsweise mittelpunkt- oder mittelliniensymmetrischen Vertiefung oder Ausnehmung im einen Bauteil (20 bzw. 18) und einer hierzu komplementären Ausbauchung im anderen Bauteil (18 bzw. 20) bestehende Verrastung beider Bauteile (18, 20) aufweisen und beide Bauteile (18, 20) miteinander verklebt sind.

6. Rahmen nach Anspruch 1 oder 3, dadurch gekennzeichnet, daß in dem Anschlußflansch (18) eines jeden Längsholmprofils (3 bzw. 4-16) mindestens eine Reihe von Durchgangs- oder Gewindelöchern (33) in regelmäßigem Abstand zueinander und in jedem Seitensteg (20) des Zwischenstückes (19) mindestens eine Reihe von Durchgangslöchern oder von komplentär zu Durchgangslöchern (33) des zugeordneten Anschlußflansches (18) des benachbarten Längsholmprofiles (3 bzw. 4-16) vorgesehenen Gewindelöchern in rastergleicher Anordnung vorgesehen ist und benachbarte Längsholmprofil-Anschlußflansche (18) und Zwischenstück-Seitenstege (20) mittels in komplementäre Durchgangs- bzw. Gewindelöcher (33) in diesen ein- bzw. diese durchgreifender Schraubelemente (31) miteinander verschraubt sind.

7. Rahmen nach einem der vorhergehenden Ansprüche, dadurch gekennzeichnet, daß die Längsholmprofile (3 bis 16) jeweils am freien Ende ihres Decksteges (17) einen sich mit Neigung zur Ebene des Fördermittels normalen Mittellängsebene (m) der Bandfördervorrichtung (1) erstreckenden Anschlußflansch (20) aufweisen (Fig. 3 und 4).

8. Rahmen nach einem der Ansprüche 1-6, dadurch gekennzeichnet, daß die Längsholmprofile (3 bis 16) jeweils am freien Ende ihres Decksteges (17) einen sich etwa parallel zur Ebene des Fördermittels normalen Mittellängsebene (m) der Bandfördervorrichtung (1) erstreckenden Anschlußflansch (20) aufweisen (Fig. 1, 2 und 5-10).

9. Rahmen nach einem der vorhergehenden Ansprüche, dadurch gekennzeichnet, daß das Zwischenstück (19) mit den Deckstegen (17) der beiden Längsholmprofile (3 bis 16) fluchtendem Mittelsteg und sich von diesem nach unten wegerstreckenden Seitenstegen (20) angeordnet ist (Fig. 1 bis 4 und 7-10).

10. Rahmen nach einem der Ansprüche 1-8 mit als U-Profil ausgebildetem Zwischenstück, dadurch gekennzeichnet, daß das Zwischenstück (19) mit gegenüber den Deckstegen (17) der beiden Längsholmprofile (3 bis 16) tiefer liegendem Mittelsteg und sich von diesem nach oben wegerstreckenden Seitenstegen (20) angeordnet ist (Fig. 5 und 6).

11. Rahmen nach Anspruch 10, dadurch gekennzeichnet, daß das Zwischenstück (19) am freien Ende eines jeden seiner Seitenstege (20) einen sich parallel zum Decksteg (17) des benachbarten Längsholmprofils (3-16) erstreckenden Tragflansch (21) aufweist (Fig. 6).

12. Rahmen nach Anspruch 11, dadurch gekennzeichnet, daß die Tragflansche (21) des Zwischenstückes (19) jeweils eine mehr als die Hälfte der Breite des zugeordneten Decksteges (17) des benachbarten Längsholmprofils (3-16) überdeckende Breite aufweisen.

13. Rahmen nach einem der vorhergehenden Ansprüche, dadurch gekennzeichnet, daß die Längsholmprofile (3-16) jeweils als U-Profile mit unterschiedlich langen Seitenstegen (18, 28) ausgebildet und mit ihrem Mittelsteg (17) den Decksteg und mit ihrem kürzeren Seitensteg (18) den Anschlußflansch bildend angeordnet sind, so daß ihr längerer Seitensteg (28) jeweils den Außensteg bzw. die Seitenwand des Rahmens (2) bildet.

14. Rahmen nach Anspruch 13, dadurch gekennzeichnet, daß die Längsholmprofile (3-16) jeweils am freien Ende ihres längeren Seitensteges (28) einen sich von diesem weg in Richtung der zur Ebene des Fördermittels normalen Mittellängsebene (m) der Bandfördervorrichtung (1) erstreckenden Randflansch (24) aufweisen (Fig. 2-10).

15. Rahmen nach Anspruch 14, dadurch gekennzeichnet, daß der Randflansch (24) eine den Zwischenraum zwischen Innenseite des ihn tragenden Außensteges (28) des Längsholmprofils (3-16) und dem benachbarten Ende einer Stützrolle oder Stützwalze (43) oder einer Stütztraverse für das Untertrum des Fördermittels übergreifende Breite aufweist (Fig. 2 und 6).

16. Rahmen nach Anspruch 14, dadurch gekennzeichnet, daß der Randflansch (24) eine im Vergleich zum Raum zwischen Innenseite des ihn tragenden Außensteges (28) des Längsholmprofils (3-16) und dem benachbarten Ende einer Stützrolle oder Stützwalze (43) oder einer Stütztraverse für das Untertrum des Fördermittels geringere Breite aufweist (z. B. Fig. 7).

17. Rahmen nach einem der Ansprüche 14-16, dadurch gekennzeichnet, daß die Längsholmprofile (3-16) jeweils am freien Ende ihres Randflansches (24) einen sich in Richtung auf den Decksteg (17) zu erstreckenden Versteifungsflansch (25) aufweisen (Fig. 3-10).

18. Rahmen nach Anspruch 17, dadurch gekennzeichnet, daß der Versteifungsflansch (25) sich mit Neigung gegenüber der zur Ebene des Fördermittels normalen Mittellängsebene (m) der Bandfördervorrichtung (1) erstreckt (Fig. 3-5).

19. Rahmen nach Anspruch 18, dadurch gekennzeichnet, daß der Versteifungsflansch (25) sich mit nach oben bezüglich der zur Ebene des Fördermittels normalen Mittellängsebene (m) der Bandfördervorrichtung (1) divergierender Neigung erstreckt (Fig. 4 und 5).

20. Rahmen nach Anspruch 18, dadurch gekennzeichnet, daß der Versteifungsflansch (25) sich mit nach oben bezüglich der zur Ebene des Fördermittels normalen Mittellängsebene (m) der Bandfördervorrichtung (1) konvergierender Neigung erstreckt (Fig. 3).

21. Rahmen nach einem der Ansprüche 18-20, dadurch gekennzeichnet, daß der Versteifungsflansch (25) sich mit einem Neigungswinkel ($\alpha$) bis etwa 30° gegenüber der zur Ebene des Fördermittels normalen Mittellängsebene (m) der Bandfördervorrichtung (1) erstreckt (Fig. 3-5).

22. Rahmen nach Anspruch 17, dadurch gekennzeichnet, daß der Versteifungsflansch (25) sich etwa parallel zur zur Ebene des Fördermittels normalen Mittellängsebene (m) der Bandfördervorrichtung (1) erstreckt (Fig. 6-10).

23. Rahmen nach Anspruch 22, dadurch gekennzeichnet, daß die Versteifungsflansche (25) beider Längsholmprofile (3-16) in zueinander fluchtender Anordnung mindestens eine Reihe von in regelmäßigem Abstand zueinander angeordneten Durchgangslöchern und/oder eine Reihe zu seinem freien Rand hin offener Aufnahmeschlitze für Achsen (44) von Andrück- oder Führungswalzen (43) oder -rollen, Wellen von Zusatzaggregaten, Verbindungselemente zu Anschlußbauteilen od. dgl. aufweisen.

24. Rahmen nach einem der Ansprüche 17-23, dadurch gekennzeichnet, daß mit den Versteifungsflanschen (25) der Längsholmprofile (3-16) jeweils ein Seitensteg (30) eines als U- oder C-Profil ausgebildeten Bodenteils (29) kraft- und/oder formschlüssig verbunden ist (Fig. 8 und 9).

25. Rahmen nach Anspruch 24, dadurch gekennzeichnet, daß die Seitenstege (30) des Bodenteils (29) und der zugeordnete Versteifungsflansch (25) des benachbarten Längsholmprofils (3-16) jeweils mindestens eine aus einer vorzugsweise mittelpunkt- oder mittelliniensymmetrischen Vertiefung oder Ausnehmung im einen Bauteil (30 bzw. 25) und einer hierzu komplementären Ausbauchung im anderen Bauteil (25 bzw. 30) bestehende Verrastung beider Bauteile (25, 30) aufweisen.

26. Rahmen nach Anspruch 24 oder 25, dadurch gekennzeichnet, daß in dem Versteifungsflansch (25) eines jeden Längsholmprofils (3-16) mindestens eine Reihe von Durchgangs- oder Gewindelöchern in regelmäßigem Abstand zueinander und in jedem Seitensteg (30) des Bodenteils (29) mindestens eine Reihe von Durchgangslöchern oder von komplementär zu Durchgangslöchern des zugeordneten Versteifungsflansches (25) des benachbarten Längsholmprofils (3-16) vorgesehenen Gewindelöchern in rastergleicher Anordnung vorgesehen ist und benachbarte Längsholmprofil-Versteifungsflansche (25) und Bodenteil-Seitenstege (30) mittels in komplementäre Durchgangs- bzw. Gewindelöcher in diesen ein- bzw. diese durchgreifender Schraubelemente (32) miteinander verschraubt sind.

27. Rahmen nach einem der Ansprüche 24-26 mit als U-Profil ausgebildetem Bodenteil, dadurch gekennzeichnet, daß das Bodenteil (29) mit seinem Mittelsteg auf den freien Randkanten der Versteifungsflansche (25) der beiden Längsholmprofile (3-16) aufliegend und mit seinen Seitenstegen (30) diese hintergreifend angeordnet ist (Fig. 8).

28. Rahmen nach einem der vorhergehenden Ansprüche, dadurch gekennzeichnet, daß den Verbindungen zwischen Anschlußflansch (17) eines Längsholmprofils (3-16) und zugeordnetem Seitensteg (20) des Zwischenstückes (19) und/ oder zwischen Versteifungsflansch (25) eines Längsholmprofils (3-16) und zugeordnetem Seitensteg (30) eines etwa vorgesehenen Bodenteils (29) durch leichtes Divergieren von Anschlußflansch (17) und Mittelstück-Seitensteg (20) bzw. Versteifungsflansch (25) und Bodenteil-Seitensteg (30) in Richtung auf ihre freien Ränder zu eine auf Lösen dieser Verbindungen gerichtete Vorspannung aufgeprägt ist.

29. Rahmen nach einem der vorhergehenden Ansprüche mit als U-Profil ausgebildetem Zwischenstück, dadurch gekennzeichnet, daß der Anschlußflansch (18) eines jeden Längsholmprofils (3-16) einen in Richtung auf die zur Ebene des Fördermittels normale Mittellängsebene (m) der Bandfördervorrichtung (1) zu abgekröpften Anschlagbereich (22) aufweist, auf dem der zugeordnete Seitensteg (20) des Zwischenstückes (19) aufliegt (z. B. Fig. 7).

30. Rahmen nach einem der Ansprüche 1-28 mit als C-Profil ausgebildetem Zwischenstück, dadurch gekennzeichnet, daß der Anschlußflansch (18) eines jeden Längsholmprofils (3-16) einen in Richtung auf die zur Ebene des Fördermittels normale Mittellängsebene (m) der Bandfördervorrichtung (1) zu abgekröpften Anschlagbereich (22) aufweist, auf dem der den zugeordneten Seitensteg (20) in Richtung auf diese Mittellängsebene (m) der Bandfördervorrichtung (1) verlängernde Randsteg (21) des Zwischenstückes (19) aufliegt (z. B. Fig. 7).

31. Rahmen nach Anspruch 30, dadurch gekennzeichnet, daß zumindest die Anschlagbereiche (22) der Anschlußflansche (18) der Längsholmprofile (3-16) jeweils mit dem aufliegenden Randsteg (21) des Zwischenstückes (19), vorzugsweise aber auch jeweils die Mittelbereiche der Anschlußflansche (18) der Längsholmprofile (3-16) jeweils mit dem zugeordneten Seitensteg (20) des Zwischenstückes (19), kraftschlüssig und/ oder formschlüssig verbunden sind.

32. Rahmen nach einem der Ansprüche 13-31, dadurch gekennzeichnet, daß zumindest eines der Längsholmprofile (3-16) im Bereich seines längeren Seitensteges (28) mindestens eine etwa topfartige Einbauchung (z. B. 42) ins Profilinnere hinein oder Ausbauchung (z. B. 41) aus diesem heraus mit etwa kreisförmiger Randkontur und vorzugsweise einem Mittelpunktsloch oder mit etwa elliptischer Randkontur und vorzugsweise mindestens zwei auf der längeren Achse derselben angeordneten Löchern (27) oder einem sich beidseitig derselben erstreckenden, vorzugsweise symmetrisch zu dieser gelegenen schlitzartigen Langloch aufweist (Fig. 10).

33. Rahmen nach einem der Ansprüche 13-31, dadurch gekennzeichnet, daß zumindest eines der Längsholmprofile (3-16) im Bereich seines längeren Seitensteges (28) mindestens eine in Richtung seiner Längsachse verlaufende etwa rinnenartige Einbauchung (40 bzw. 42) ins Profilinnere hinein oder Ausbauchung (39 bzw. 41) aus diesem heraus mit begrenzter oder sich über die gesamte Länge des Längsholmprofils (3-16) erstreckender Länge aufweist (Fig. 9 und 10).

34. Rahmen nach Anspruch 33, dadurch gekennzeichnet, daß die Einbauchung(en) (40 bzw. 42) bzw. Ausbauchung(en) (39 bzw. 41) schräge Übergangsbereiche zwischen einem ebenen Mittelbereich und den benachbarten Bereichen des längeren Seitensteges (28) des Längsholmprofils (3-16) aufweist bzw. aufweisen.

35. Rahmen nach Anspruch 33 oder 34, dadurch gekennzeichnet, daß im ebenen Mittelbereich der Einbauchung (40 bzw. 42) bzw. Ausbauchung (39 bzw. 41) mindestens eine Reihe von Durchgangs- oder Gewindelöchern (27) in regelmäßigem Abstand zueinander vorgesehen ist.

36. Rahmen nach einem der vorhergehenden Ansprüche, dadurch gekennzeichnet, daß die Längsholmprofile (3-16) im Bereich ihres Decksteges (17) und/oder ihres die Seitenfläche des Rahmens bildenden Außensteges (28) und/oder ihres unteren Randflansches (24) mindestens eine vorzugsweise mittelpunkt- oder mittelliniensymmetrische sickenartige Ein- oder Ausbauchung (37 bzw. 38 ; 35 bzw. 36) in Anordnung längs der Längsache des Längsholmprofils (3-16) aufweisen.

37. Rahmen nach einem der vorhergehenden Ansprüche, dadurch gekennzeichnet, daß das Zwischenstück (19) in seinem mittleren Bereich durch mindestens eine, vorzugsweise eine Mehr-

**0 154 929**

zahl von in Rahmenlängsrichtung in Abstand zueinander angeordneten Quertraverse(n) (33, 34) abgestützt ist.

38. Rahmen nach einem der vorhergehenden Ansprüche, dadurch gekennzeichnet, daß die Längsholmprofile (3-16) über praktisch der gesamten Rahmenlänge einstückig ausgebildet sind.

39. Rahmen nach einem der Ansprüche 1-37, dadurch gekennzeichnet, daß die Längsholmprofile (3 bis 16) über der Rahmenlänge mehrteilig ausgebildet sind.

40. Rahmen nach Anspruch 39, dadurch gekennzeichnet, daß das Zwischenstück (19) über praktisch der gesamten Rahmenlänge einstückig ausgebildet ist und dadurch als Verbindungselement für benachbarte Teilstücke (z. B. 3a) der mehrteiligen Längsholmprofile (3-16) dient.

41. Rahmen nach Anspruch 39, dadurch gekennzeichnet, daß das Zwischenstück (19) gleichfalls mehrteilig ausgebildet ist und Teilstücke desselben jeweils eine Stoßstelle benachbarter Teilstücke (z. B. 3a) der mehrteiligen Längsholmprofile (3-16) als Verbindungselement übergreifend angeordnet sind.

**Claims**

1. Frame (2) for belt conveyors (1) formed from longerons held together by cross-members (33) screwed to them, the longerons of which are constructed as profile members (3-16) open in the direction of the conveyor means with an outer web (28) and a cover web (17) extending from its upper end, characterised in that the longeron profile members (3-16) have on the free ends of their cover webs (17) a connecting flange (18) extending downwardly therefrom and both longeron profile members (3-16) are connected together by means of intermediate members (19) constructed as U-shaped or C-shaped profiles, whose two side and/or edge webs (20 or 21) extending from its middle web complementarily to the connecting flange (18) of the adjacent longeron profile member (3 or 4-16) are connected therewith.

2. Frame according to claim 1, characterised in that the side webs (20) of the intermediate member (19) and the associated connecting flange (18) of the adjacent longeron profile members (3 or 4-16) are positively connected to one another.

3. Frame according to claim 1 or 2, characterised in that the side webs (20) of the intermediate member (19) and the associated connecting flange (18) of the adjacent longeron profile members (3 or 4-16) are lockingly connected to one another.

4. Frame according to claim 2 or 3, characterised in that the sid webs (20) of the intermediate member (19) and the associated connecting flange (18) of the adjacent longeron profile members (3 or 4-16) are adhesively connected to one another.

5. Frame according to claim 4 with a positive or a locking connection of the side webs of the intermediate member and the associated connecting flange of the adjacent longeron profile members, characterised in that the side webs (20) of the intermediate member (19) and the associated connecting flange (18) of the adjacent longeron profile members (3 or 4-16) each include an interengagement arrangement of the two components (18, 20) comprising at least one depression or recess, preferably symmetrical about a mid-point or a mid-line, in one component (20 or 18) and a complementary projection in the other component (18 or 20) and the two components (18, 20) are adhesively connected together.

6. Frame according to claim 1 or 3, characterised in that at least one series of throughgoing or threaded apertures (33) is provided in the connecting flange (18) of one of the longeron profile members (3 or 4-16), having a regular spacing from one another and at least one series of through-going apertures or threaded apertures provided complementary to the through-going apertures (33) of the associated connecting flange (18) of the adjacent longeron profile members (3-4 or 16) is provided in each side web (20) of the intermediate member (19) in a like arrangement and adjacent longeron profile member-connecting flanges (18) and intermediate member-side webs (20) are screwed together with one another by means of threaded elements (31) engaging in or through these by means of through-going or threaded apertures (33) therein.

7. Frame according to any of the preceding claims, characterised in that the longeron profile members (3-16) have, on the free ends of their cover webs (17), a connecting flange (20) extending at an angle to the longitudinal median plane (m) of the belt conveyor (1) normal to the plane of the conveyor means (Fig. 3 and 4).

8. Frame according to any of claims 1 to 6, characterised in that the longeron profile members (3 to 16) have, on the free ends of their cover webs (17), a connecting flange (20) extending approximately parallel to the longitudinal median plane (m) of the belt conveyor (1) normal to the plane of the conveyor means (Fig. 1, 2 and 5-10).

9. Frame according to any of the preceding claims, characterised in that the intermediate member (19) is arranged with its middle web merging with the cover webs (17) of the two longeron profile members (3-16) and its side webs (20) extending from this downwardly (Figs. 1-4 and 7-10).

10. Frame according to any of claims 1 to 8 with an intermediate member constructed as a U-shaped profile, characterised in that the intermediate member (19) is arranged with its middle web lying deeper relative to the cover webs (17) of the two longeron profile members (3-16) and its side webs (20) extend from this upwardly (Figs. 5 and 6).

11. Frame according to claim 10, characterised in that the intermediate member (19) has, on the free end of one of its side webs (20), a support flange (21) extending parallel to the cover web (17) of the adjacent longeron profile member (3-16) (Fig. 6).

12. Frame according to claim 11, characterised in that the support flange (21) of the intermediate member (19) has a width extending over more than half the width of the associated cover webs (17) of the adjacent longeron profile member (3-16).

13. Frame according to any of the preceding claims, characterised in that the longeron profile members (3-16) are constructed as U-shaped profile members with side webs (18, 28) of different lengths and are arranged with the middle web (17) forming the cover web and with the shorter side web (18) forming the connecting flange, so that the longer side web (28) forms the outer web or side wall of the frame (2).

14. Frame according to claim 13, characterised in that the longeron profile members (3-16) have, on the free ends of their longer side webs (28), a peripheral flange (24) extending from this in the direction of the longitudinal median plane (m) of the belt conveyor (1) normal to the plane of the conveyor means (Figs. 2-10).

15. Frame according to claim 14, characterised in that the peripheral flange (24) has a width extending over the intermediate space between the inside of the outer web (28) of the longeron profile member (3-6) carrying it and the adjacent end of a supporting roller or supporting member (43) or a supporting strut for the lower run of the conveyor means (Figs. 2 and 6).

16. Frame according to claim 14, characterised in the peripheral flange (24) has a lesser width, in comparison to the space between the inside of the outer web (28) of the longeron profile members (3-6) carrying it and the adjacent end of a supporting roller or supporting member (43) or a transverse strut for the lower run of the conveyor means (e. g. Fig. 7).

17. Frame according to any of claims 14 to 16, characterised in that the longeron profile members (3-16) have, on the free end of their peripheral flanges (24), a reinforcing flange (25) extending in the direction of the cover web (17) (Figs. 3-10).

18. Frame according to claim 17, characterised in that the reinforcing flange (28) extends at an angle with respect to the longitudinal median plane (m) of the belt conveyor (1) normal to the plane of the conveyor means (Figs. 3-5).

19. Frame according to claim 18, characterised in that the reinforcing flange (25) extends at an angle diverging upwardly relative to the longitudinal median plan (m) of the belt conveyor (1) normal to the plane of the conveyor means (Figs. 4 and 5).

20. Frame according to claim 18, characterised in that the reinforcing flange (25) extends at an angle converging upwardly relative to the longitudinal median plane (m) of the belt conveyor (1) normal to the plane of the conveyor means (Fig. 3).

21. Frame according to any of claims 18 to 20, characterised in that the reinforcing flange (25) extends at an inclination angle ($\alpha$) of up to about 30° relative to the longitudinal median plane (m) of the belt conveyor (1) normal to the plane of the conveyor means (Figs. 3-5).

22. Frame according to claim 17, characterised in that the reinforcing flange (28) extends approximately parallel to the longitudinal median plane (m) of the belt conveyor (1) normal to the plane of the conveyor means (Figs. 6-10).

23. Frame according to claim 22, characterised in that the reinforcing flanges (25) of the two longeron profile members (3-16) have, in a mutually merging arrangement, at least one series of through-going holes arranged at a regular spacing from one another and/or a series of receiving slots open to the free rim, for axles (44) of contact or guide rollers (43) or rollers, shafts of additional components, connecting elements to associated parts or the like.

24. Frame according to any of claims 17 to 23, characterised in that a side web (30) of a base member (29) constructed as a U-shaped or C-shaped profile is positively and/or lockingly connected with the reinforcing flanges (25) of the longeron profile members (3-16) (Figs. 8 and 9).

25. Frame according to claim 24, characterised in that the side webs (30) of the cover part (29) and the associated reinforcing flanges (25) of the adjacent longeron profile members (3-16) have interengaging means for the two components (25, 30), comprising at least one depression or recess preferably symmetrical about the mid-point or mid-line in one component (30 or 25) and a complementary projection in the other component (25 or 30).

26. Frame according to claim 24 or 25, characterised in that at least one series of through-going or threaded holes at a regular spacing from one another is provided in the reinforcing flange (25) of one of the longeron profile members (3-16) and at least one series of through-going holes or threaded holes provided complementarily to the through-going holes of the associated reinforcing flange (25) of the adjacent longeron profile members (3-16) is provided in each side web (30) of the cover part (29) in a like arrangement and adjacent longeron profile member-reinforcing flanges (25) and cover part-side webs (30) are screwed to one another by means of threaded elements (32) engaging in or through therein by means of complementary through-going or threaded holes.

27. Frame according to any of claims 24 to 26 with a cover part constructed as a U-shaped profile, characterised in that the cover part (29) rests with its middle web on the free peripheral edges of the reinforcing flange (25) of the two longeron profile members (3-16) and is arranged to engage behind these with its side webs (30) (Fig. 8).

28. Frame according to any of the preceding claims, characterised in that connection between the connecting flanges (17) of a longeron profile member (3-16) and the associated side web (20) of the intermediate member (19) and/or between the reinforcing flange (25) of a longeron profile member (3-16) and the associated side web (30) of any cover part (29) provided is effected by slightly diverging the connecting flange (17) and the side web of the middle part (20) or the reinforcing flange (25) and the cover part-side web (30) in the direction toward their free edges so as to give a pre-stress directed to loosen these connections.

29. Frame according to any preceding claim with an intermediate member constructed as a U-shaped profile, characterised in that the connecting flange (18) of one of the longeron profile members (3-16) has an offset abutment region (22) formed in the direction of the longitudinal median plane (m) of the belt conveyor (1) normal to the plane of the conveyor means, upon which is supported the associated side web (20) of the intermediate member (19) (e. g. Fig. 7).

30. Frame according to any of claims 1 to 28 with an intermediate member constructed as a C-shaped profile, characterised in that the connecting flange (18) of one of the longeron profile members (3-16) has an offset abutment region (22) formed in the direction of the longitudinal median plane (m) of the belt conveyor (1) normal to the plane of the conveyor means, upon which is supported the peripheral web (21) of the intermediate member (19) extending to the associated side web (20) in the direction of the longitudinal median plane (m) of the belt conveyor (1) (e. g. Fig. 7).

31. Frame according to claim 30, characterised in that at least the abutment regions (22) of the connecting flanges (18) of the longeron profile members (3-16) are positively and/or lockingly connected with the supported peripheral web (21) of the intermediate member (19), preferably however, also the middle regions of the connecting flanges (18) of the longeron profile members (3-16) with the associated side web (20) of the intermediate member (19).

32. Frame according to any of claims 13 to 31, characterised in that at least one of the longeron profile members (3-16) has in the region of its longer side web (28) at least one head-shaped projection (e. g. 42) inside the profile or an external projection (e. g. 41) from this, with an approximately arcuate contour and preferably a central aperture or with an approximately elliptical contour and preferably at least two apertures (27) arranged on the longitudinal axis thereof or a slot-like longitudinal aperture preferably extending symmetrically thereto on both sides thereof (Fig. 10).

33. Frame according to any of claims 13 to 31, characterised in that at least one of the longeron profile members (3-16) has in the region of its longer side web (28) at least one generally rib-like inward projection (40 or 42) into the inside of the profile, running in the direction of its longitudinal axis, or an external projection (39 or 41) therefrom with a length limited to or extending beyond the total length of the longeron profile member (3-16) (Figs. 9 and 10).

34. Frame according to claim 33, characterised in that the inward projection(s) (40 or 42) or external projection(s) (39 or 41) have inclined connecting regions between a flat middle region and the adjacent regions of the longer side webs (28) of the longeron profile members (3-16).

35. Frame according to claim 33 or 34, characterised in that at least one series of through-going or threaded apertures (27) is provided at a regular mutual spacing in the flat middle region of the inward projection (40 or 42) or the outward projection (39 or 41).

36. Frame according to any of the preceding claims, characterised in that the longeron profile members (3-16) have in the region of their cover webs (17) and/or their outer webs (28) forming the side surfaces of the frame and/or their lower peripheral flanges (24) at least one sickle-shaped inward or outward projection (37 or 38 ; 35 or 36) preferably arranged symmetrically to the mid-point or mid-line and arranged along the longitudinal axis of the longeron profile members (3-16).

37. Frame according to any of the preceding claims, characterised in that the intermediate member (19) is supported in its middle region by at least one and preferably a plurality of transverse members (33, 34) arranged at a mutual spacing in the longitudinal direction of the frame.

38. Frame according to any of the preceding claims, characterised in that the longeron profile members (16) are formed in one piece practically over the whole length of the frame.

39. Frame according to any of claims 1 to 37, characterised in that the longeron profile members (3-16) are made in several parts along the length of the frame.

40. Frame according to claim 39, characterised in that the intermediate member (19) over practically the whole length of the frame is made in one piece and thereby serves as the connecting element for adjacent components (e. g. 3a) of the multi-part longeron profile members (3-16).

41. Frame according to claim 39, characterised in that the intermediate member (19) if required is made in several parts and components thereof are arranged in association with adjacent components (e. g. 3a) of multi-part longeron profile members (3-16) as connecting elements.

## Revendications

1. Châssis (2) pour dispositifs transporteurs à bande (1), formé par des longerons assemblés par des traverses (33) vissées sur ces longerons, dont chaque longeron est constitué par un profilé (3-16) s'ouvrant vers l'organe transporteur et comprenant une âme extérieure (28) et une aile de pont (17) qui part de l'extrémité supérieure de l'âme, caractérisé en ce que chacun des profilés (3-16) de longerons présente à l'extrémité libre de son aile de pont (17), une nervure de raccordement (18) qui part de cette extrémité libre vers le bas, et les deux profilés de longerons (3-16) sont assemblés l'un à l'autre au moyen d'un élément intermédiaire (19) constitué par un profilé en U ou en C, dont chacune des deux ailes latérales et/ou de bord (20 ou 21 respectivement), qui part de son âme centrale, avec une forme à peu près complémentaire de celle de la nervure de raccordement (18) du profilé de longeron adjacent (3 ou 4-16), est réunie à cette nervure.

2. Châssis selon la revendication 1, caractérisé en ce que, de chaque côté, l'aile latérale (20) de l'élément intermédiaire (19) et la nervure de raccordement correspondante (18) du profilé de longeron adjacent (3 ou 4-16) sont reliées par un assemblage par action de force.

3. Châssis selon la revendication 1 ou 2, caractérisé en ce que, de chaque côté, l'aile latérale (20) de l'élément intermédiaire (19) et la nervure de raccordement correspondante (18) du profilé de longeron adjacent (3 ou 4-16) sont assemblées par une liaison mécanique.

4. Châssis selon la revendication 2 ou 3, caractérisé en ce que, de chaque côté, l'aile latérale (20) de l'élément intermédiaire (19) et la nervure de raccordement correspondante (18) du profilé de longeron adjacent (3 ou 4-16) sont assemblées par collage.

5. Châssis selon la revendication 4, comportant un assemblage par action de force ou de nature mécanique entre les ailes latérales de l'élément intermédiaire et les nervures de raccordement correspondantes des profilés de longerons adjacents, caractérisé en ce que, de chaque côté, l'aile latérale (20) de l'élément intermédiaire (19) et la nervure de raccordement correspondante (18) du profilé de longeron adjacent (3 ou 4-16) présentent au moins un verrouillage mutuel formé d'un renfoncement ou d'un évidement, de préférence symétrique par rapport à un point ou par rapport à un axe, et ménagé dans un élément (20 ou 18 respectivement) et d'un bossage complémentaire prévu dans l'autre élément (18 ou 20 respectivement), et les deux éléments (18, 20) sont assemblés par collage.

6. Châssis selon la revendication 1 ou 3, caractérisé en ce que, dans la nervure de raccordement (18) de chaque profilé de longeron (3 ou 4-16), il est prévu au moins une rangée de trous de passage ou filetés (33), disposés à un écartement mutuel régulier et que, dans chaque aile latérale (20) de l'élément intermédiaire (19), est prévue au moins une rangée de trous de passage ou de trous filetés, complémentaires des trous de passage (33) de la nervure de raccordement correspondante (18) du profilé de longeron adjacent (3 ou 4-16), selon une disposition en trame, et les nervures de raccordement (18) des profilés de longerons et les ailes latérales (20) de l'élément intermédiaire qui leur sont adjacentes sont assemblées par boulonnage, au moyen d'éléments de boulonnage (31) qui traversent les trous de passage et sont vissés dans les trous filetés complémentaires (33).

7. Châssis selon une des revendications précédentes, caractérisé en ce que les profilés de longerons (3 à 16) présentent chacun, à l'extrémité libre de son aile de pont (17), une nervure de raccordement (20) qui s'étend avec une inclinaison vers le plan médian longitudinal (m) du dispositif transporteur à bande (1), qui est perpendiculaire au plan de l'organe transporteur (figures 3 et 4).

8. Châssis selon une des revendications 1-6, caractérisé en ce que les profilés de longerons (3 à 16) présentent chacun, à l'extrémité libre de son aile de pont (17), une nervure de raccordement (20) qui s'étend à peu près parallèlement au plan longitudinal médian (m) du dispositif transporteur à bande (1), qui est perpendiculaire au plan de l'organe transporteur (figures 1, 2 et 5-10).

9. Châssis selon une des revendications précédentes, caractérisé en ce que l'élément intermédiaire (19) est disposé avec l'âme centrale au même niveau que les ailes de pont (17) des deux profilés de longerons (3 à 16) et avec ses ailes latérales (20) qui partent de cette âme vers le bas (figures 1 à 4 et 7-10).

10. Châssis selon une des revendications 1-8, comportant un élément intermédiaire constitué par un profilé en U, caractérisé en ce que l'élément intermédiaire (19) est disposé avec son âme centrale placée plus bas que les ailes de pont (17) des deux profilés de longerons (3 à 16) et avec ses ailes latérales (20) qui partent de cette âme vers le haut (figures 5 et 6).

11. Châssis selon la revendication 10, caractérisé en ce que, à l'extrémité libre de chacune de ses ailes latérales (20), l'élément intermédiaire (19) présente une nervure d'appui (21) qui s'étend parallèlement à l'aile de pont (17) du profilé de longeron adjacent (3-16) (figure 6).

12. Châssis selon la revendication 11, caractérisé en ce que les ailes d'appui (21) de l'élément intermédiaire (19) présentent chacune une largeur qui recouvre plus de la moitié de la largeur de l'aile de pont correspondante (17) du profilé de longeron adjacent (3-16).

13. Châssis selon une des revendications précédentes, caractérisé en ce que les profilés de longerons (3-16) sont constitués par des profilés en U possédant des âmes latérales (18, 28) de différentes longueurs et disposées pour former l'aile de pont au moyen de leur âme centrale (17) et la nervure de raccordement au moyen de leur âme latérale courte (18), de sorte que leur âme latérale longue (28) forme l'âme extérieure ou la paroi latérale du châssis (2).

14. Châssis selon la revendication 13, caractérisé en ce que chaque profilé de longeron (3-16) présente, à l'extrémité libre de son âme latérale longue (28), une nervure de bord (24) qui part de celle-ci en direction du plan longitudinal médian (m) du dispositif transporteur à bande (1), qui est perpendiculaire au plan de l'organe transporteur (figures 2-10).

15. Châssis selon la revendication 14, caractérisé en ce que la nervure de bord (24) présente une largeur qui couvre l'espace intercalaire entre le côté intérieur de l'âme extérieure (28) du profilé de longeron (3-16), qui la porte, et l'extrémité adjacente d'un rouleau d'appui ou cylindre d'appui (43), ou d'une traverse d'appui destinée à supporter le brin inférieur de l'organe transporteur (figures 2 et 6).

16. Châssis selon la revendication 14, caractérisé en ce que la nervure de bord (24) présente une plus petite largeur que l'espace compris entre le côté intérieur de l'âme extérieure (28) du profilé de longeron (3-16), qui la porte, et l'extrémité adjacente d'un rouleau d'appui ou cylindre d'appui (43), ou d'une traverse d'appui destinée à supporter le brin inférieur de l'organe transporteur (par exemple figure 7).

17. Châssis selon une des revendications 14-16 caractérisé en ce que chaque profilé de longeron (3-16) présente, à l'extrémité libre de sa nervure de bord (24), une nervure raidisseuse (25) qui s'étend vers l'aile de pont (17) (figures 3-10).

18. Châssis selon la revendication 17, caractérisé en ce que la nervure raidisseuse (25) s'étend avec une inclinaison par rapport au plan longitudinal médian (m) du dispositif transporteur à bande (1), qui est perpendiculaire au plan de l'organe transporteur (figures 3-5).

19. Châssis selon la revendication 18, caractérisé en ce que la nervure raidisseuse (25) s'étend avec une inclinaison qui diverge vers le haut par rapport au plan longitudinal médian (m) du dispositif transporteur à bande (1), qui est perpendiculaire au plan de l'organe transporteur (figures 4 et 5).

20. Châssis selon la revendication 18, caractérisé en ce que la nervure raidisseuse (25) s'étend avec une inclinaison qui converge vers le haut par rapport au plan longitutinal médian (m) du dispositif transporteur à bande (1), qui est perpendiculaire au plan de l'organe transporteur (figure 3).

21. Châssis selon une des revendications 18-20, caractérisé en ce que la nervure raidisseuse (25) s'étend avec un angle d'inclinaison ($\alpha$), pouvant atteindre jusqu'à environ 30°, par rapport au plan longitudinal médian (m) du dispositif transporteur à bande (1), qui est perpendiculaire au plan de l'organe transporteur (figures 3-5).

22. Châssis selon la revendication 17, caractérisé en ce que la nervure raidisseuse (25) s'étend à peu près parallèlement au plan longitudinal médian (m) du dispositif transporteur à bande (1), qui est perpendiculaire au plan de l'organe transporteur (figures 6-10).

23. Châssis selon la revendication 22, caractérisé en ce que les nervures raidisseuses (25) des deux profilés de longerons (3-16) présentent respectivement, dans des dispositions mutuellement alignées, des rangées de trous de passage disposés à écartement mutuel régulier et/ou une rangée de fentes réceptrices, qui s'ouvrent vers leur bord libre, pour recevoir des axes (44) de cylindres (43) ou rouleaux de pression ou de guidage, des arbres de groupes auxiliaires, des éléments d'assemblage pour des pièces de raccordement, ou équivalents.

24. Châssis selon une des revendications 17-23, caractérisé en ce que, à chacune des nervures raidisseuses (25) des profilés de longerons (3-16) est assemblée, par une liaison par action de force et/ou de nature mécanique, une aile latérale (30) d'un élément de fond (29) constitué par un profilé en U ou en C (figures 8 et 9).

25. Châssis selon la revendication 24, caractérisé en ce que, de chaque côté, l'aile latérale (30) de l'élément de fond (29) et l'aile raidisseuse (25) correspondante du profilé de longeron adjacent (3-16) présentent au moins un verrouillage mutuel formé d'un renfoncement ou d'un évidement, de préférence symétrique par rapport à un point ou par rapport à un axe, dans un élément (30 ou 25 respectivement), et d'un bossage complémentaire dans l'autre élément (25 ou 30 respectivement).

26. Châssis selon la revendication 24 ou 25, caractérisé en ce que, dans la nervure raidisseuse (25) de chaque profilé de longeron (3-16), il est prévu au moins une rangée de trous de passage ou filetés, disposés à écartement mutuel régulier et que, dans chaque aile latérale (30) de l'élément de fond (29), est prévue au moins une rangée de trous de passage ou de trous filetés, complémentaires des trous de passage de la nervure raidisseuse correspondante (25) du profilé de longeron adjacent (3-16), selon une disposition en trame, et les nervures raidisseuses (25) des profilés de longerons et les ailes latérales (30) de l'élément de fond, qui leur sont adjacentes, sont assemblées par boulonnage, au moyen d'éléments de boulonnage (32) qui traversent les trous de passage et sont vissées dans les trous filetés complémentaires.

27. Châssis selon une des revendications 24-26, comprenant un élément de fond constitué par un profilé en U, caractérisé en ce que l'élément de fond (29) s'appuie, par son âme centrale, sur les arêtes de bords libres des nervures raidisseuses (25) des deux profilés de longerons (3-16) et s'accroche derrière ces nervures par ses ailes latérales (30) (figure 8).

28. Châssis selon une des revendications précédentes, caractérisé en ce qu'une précontrainte est exercée sur les assemblages entre la nervure de raccordement (17) d'un profilé de longeron (3-16) et l'aile latérale (20) de l'élément intermédiaire (19), qui lui correspond, et/ou entre la nervure raidisseuse (25) d'un profilé de longeron (3-16) et l'aile latérale correspondante (30) d'un élément de fond (29) éventuellement prévu, par une légère divergence de la nervure de raccordement (17) et de l'aile latérale (20) de l'élément central, ou de la nervure raidisseuse (25) et de l'aile latérale (30) de l'élément de fond, vers les extrémités libres de ces éléments, cette précontrainte étant orientée dans le sens de la séparation de ces assemblages.

29. Châssis selon une des revendications précédentes, comportant un élément intermédiaire constitué par un profilé en U, caractérisé en ce que la nervure de raccordement (18) de chaque profilé de longeron (3-16) présente une région de butée (22) repliée vers le plan longitudinal médian (m) du dispositif transporteur à bande (1), qui est perpendiculaire au plan de l'organe transporteur, région sur laquelle s'appuie l'aile latérale correspondante (20) de l'élément intermédiaire (19) (par exemple figure 7).

30. Châssis selon une des revendications 1-28, comprenant un élément intermédiaire constitué par un profilé en C, caractérisé en ce que la nervure de raccordement (18) de chaque profilé de longeron (3-16) présente une région de butée (22) repliée vers le plan longitudinal médian (m) du dispositif transporteur à bande (1), qui est perpendiculaire au plan de l'organe transporteur, région sur laquelle s'appuie l'aile de bord (21) de l'élément intermédiaire (19), qui prolonge l'aile latérale correspondante (20) vers ce plan longitudinal médian (m) du dispositif transporteur à bande (1) (par exemple figure 7).

31. Châssis selon la revendication 30, caractérisé en ce qu'au moins les régions de butée (22) des nervures de raccordement (18) des profilés de longerons (3-16) sont assemblées, de chaque côté, à l'aile de bord sus-jacente (21) de l'élément intermédiaire (19), mais que de préférence, les régions centrales des nervures de raccordement (18) des profilés de longerons (3-16), sont elles aussi assemblées, de chaque côté, à l'aile latérale correspondante (20) de l'élément intermédiaire (19), ces assemblages étant des liaisons par action de force et/ou de nature mécanique.

32. Châssis selon une des revendications 13-31, caractérisé en ce qu'au moins l'un des profilés de longerons (3-16) présente, dans la région de son âme latérale longue (28), au moins un enfoncement (par exemple 42) à peu près en forme de godet, qui pénètre dans l'intérieur du profilé, ou un bossage (par exemple 41) qui fait saillie sur ce profilé avec un contour à peu près circulaire et de préférence avec un trou central, ou avec un contour approximativement elliptique et de préférence avec au moins deux trous (27) disposés sur le grand axe de ce contour, ou avec un trou allongé en forme de fente, qui s'étend des deux côtés de cet axe, de préférence avec une symétrie par rapport à cet axe (figure 10).

33. Châssis selon une des revendications 13-31, caractérisé en ce qu'au moins l'un des profilés de longerons (3-16) présente, dans la région de son âme latérale longue (28), au moins un enfoncement à peu près en forme de rainure (40 ou 42 respectivement) qui s'étend dans la direction de son axe longitudinal et s'enfonce dans l'intérieur du profilé, ou un bossage (39 ou 41 respectivement) qui fait saillie sur ce profilé, avec une longueur limitée ou qui s'étend sur toute la longueur du profilé de longeron (3-16) (figures 9 et 10).

34. Châssis selon la revendication 33, caractérisé en ce que l'enfoncement ou les enfoncements (40 ou 42 respectivement) présente(nt) des régions de transition obligatoires entre une région centrale plane et les régions adjacentes de l'âme latérale longue (28) du profilé de longeron (3-16).

35. Châssis selon la revendication 33 ou 34, caractérisé en ce que, dans la région centrale plane de l'enfoncement (40 ou 42 respectivement) ou du bossage (39 ou 41 respectivement), est prévue au moins une rangée de trous de passage ou filetés (27), à écartement mutuel régulier.

36. Châssis selon une des revendications précédentes, caractérisé en ce que les profilés de longerons (3-16) présentent, dans la région de leur aile de pont (17) et/ou de leur âme extérieure (28) qui forme la surface latérale du châssis et/ou de leur nervure de bord inférieure (24), au moins un enfoncement ou bossage en forme de rainure (37 ou 38 respectivement ; 35 ou 36 respectivement), symétrique par rapport à un point ou par rapport à un axe et disposé le long de l'axe longitudinal du profilé de longeron (3-16).

37. Châssis selon une des revendications précédentes, caractérisé en ce que l'élément intermédiaire (19) est soutenu, dans sa région centrale, par au moins une traverse (33, 34) ou de préférence par un grand nombre de traverses (33, 34) disposées avec un écartement mutuel dans la direction longitudinale du châssis.

38. Châssis selon une des revendications précédentes, caractérisé en ce que les profilés de longerons (3-16) sont d'une seule pièce sur pratiquement toute la longueur du châssis.

39. Châssis selon une des revendications 1-37, caractérisé en ce que les profilés de longerons (3 à 16) sont réalisés en plusieurs pièces sur la longueur du châssis.

40. Châssis selon la revendication 39, caractérisé en ce que l'élément intermédiaire (19) est d'une seule pièce sur pratiquement toute la longueur du châssis et sert de cette façon d'élément de liaison pour les pièces partielles voisines (par exemple 3a) des profilés de longerons en plusieurs pièces (3-16).

41. Châssis selon la revendication 39, caractérisé en ce que l'élément intermédiaire (19) est de même réalisé en plusieurs pièces et que les pièces partielles de cet élément sont disposées de manière que chacune coiffe, en qualité d'élément de liaison, une zone de jonction entre des pièces partielles adjacentes (par exemple 3a) des profilés de longerons en plusieurs pièces (3-16).

Fig.1

Fig.2

Fig.3

Fig.4

Fig.5

Fig.6

Fig.7

Fig.8

Fig.9

Fig.10